# EUROPEAN PATENT SPECIFICATION

(11) **EP 4 470 893 B1**
(45) Date of publication and mention of the grant of the patent: **03.06.2026**
(21) Application number: 24178424.8
(22) Date of filing: 28.05.2024
(51) Int. Cl.: B62J 45/413, B62M 25/06, B62H 1/02, B62K 11/04, B62M 7/02, B62M 25/08, B62K 23/06

(54) **STRADDLED VEHICLE**
GRÄTSCHSITZFAHRZEUG
VÉHICULE À SELLE

(30) Priority: 02.06.2023 JP 2023091470
(43) Date of publication of application: 04.12.2024
(73) Proprietor: Yamaha Hatsudoki Kabushiki Kaisha, Iwata-shi, Shizuoka 438-8501 (JP)
(72) Inventor: Takeda, Norihiro, Shizuoka, 438-8501 (JP)
(74) Representative: Grünecker Patent- und Rechtsanwälte PartG mbB

(56) References cited:
- JP-B2- 5 913 416
- US-A1- 2022 340 232
- US-B2- 9 994 286

## Description

### BACKGROUND

The present invention relates to a straddled vehicle.

JP 2022-132834 A discloses a straddled vehicle.

A straddled vehicle includes a vehicle body frame and an engine. The engine is supported by the vehicle body frame. The engine includes a crankcase and a magneto cover. The magneto cover bulges from the crankcase in a transverse direction of the straddled vehicle.

A straddled vehicle includes a bracket, a footrest, a rotation shaft, a pedal arm, and a pedal. The bracket is supported by the vehicle body frame. The footrest and the rotation shaft are supported by a bracket. The rotation shaft extends in the transverse direction of the straddled vehicle. The pedal arm extends from the rotation shaft. The pedal arm is rotatable about the rotation shaft. The pedal arm is rotatable relative to the bracket. The pedal is attached to the pedal arm. The pedal is disposed in front of the footrest. When a driver rides on the straddled vehicle, the driver places a driver's foot on the footrest and operates the pedal with the driver's foot. Specifically, the driver places the arch of the his/her foot or the heel of the driver's foot on the footrest. The driver operates the pedals with the toes of the driver's foot. When the driver operates the pedal, the pedal arm rotates about the rotation shaft.

The straddled vehicle includes a sensor. The sensor detects a rotation amount of the pedal arm around the rotation shaft. The sensor is disposed between the pedal and the footrest. Specifically, the sensor is disposed behind the pedal and in front of footrest.

The sensor is disposed in front of the rotation shaft. The sensor does not overlap the rotation shaft in side view of the straddled vehicle. The sensor is not coupled to the rotation shaft. The rotation shaft does not connect the pedal arm to the sensor.

The straddled vehicle includes a linkage. The linkage connects the pedal arm to the sensor. The linkage transmits rotation of the pedal arm about the rotation shaft to the sensor. The linkage includes a shift rod. The shift rod extends in a longitudinal direction of the straddled vehicle. The shift rod is connected to the pedal arm via a joint. The shift rod is connected to the sensor via a joint.

As described above, in JP 2022-132834 A, the sensor is disposed between the pedal and the footrest. Specifically, the sensor is disposed behind the pedal and in front of the footrest. Consequently, when the driver mounts on the straddled vehicle, the driver's foot is located rightward or leftward of the sensor. Thus, the driver's foot may touch the sensor. The driver's foot may hit the sensor.

Moreover, the further prior art document JP 5 913416 B2 discloses a straddled vehicle having a vehicle body frame, an engine supported by the vehicle body frame, a rotation shaft that is directly or indirectly supported by the vehicle body frame and extends in a transverse direction of the straddled vehicle, a pedal arm extending from the rotation shaft and configured to rotate around the rotation shaft. A front depression portion is attached to a front part of the pedal arm and a rear depression portion is attached to a rear part of the pedal arm. The front depression portion is depressed downward by the driver foot for down shift and the rear depression portion is depressed downward by the driver foot for up shift. An angle sensor is configured to detect a rotation angle of the pedal arm around the rotation shaft. The engine includes a crankcase, and a crankcase cover bulging from the crankcase in the transverse direction of the straddled vehicle. The angle sensor is disposed between the front depression portion and the rear depression portion with regard to a forward-rearward direction of the straddled vehicle. The angle sensor is disposed below the crankcase cover with regard to an up-down direction of the straddled vehicle, and at least part of the angle sensor overlaps the crankcase cover in bottom view of the straddled vehicle.

JP 5 913416 B2 discloses the following features of claim 1; a straddled vehicle comprising:a vehicle body frame;an engine supported by the vehicle body frame;a rotation shaft that is directly or indirectly supported by the vehicle body frame and extends in a transverse direction (Y) of the straddled vehicle;a pedal arm extending from the rotation shaft and configured to rotate around the rotation shaft;a footrest;a pedal attached to the pedal arm, wherein at least part of the pedal is disposed at a same height position as the footrest, the pedal is disposed in front of the footrest with regard to a forward-rearward direction (X) of the straddled vehicle, the entirety of the pedal is disposed more forward than the entirety of the footrest, the pedal does not overlap the footrest in vehicle side view; andan angle sensor configured to detect a rotation angle of the pedal arm around the rotation shaft; whereinthe engine includesa crankcase, anda crankcase cover bulging from the crankcase in the transverse direction of the straddled vehicle,the angle sensor is disposed below the crankcase cover with regard to an up-down direction of the straddled vehicle, andat least part of the angle sensor overlaps the crankcase cover in bottom view of the straddled vehicle.

The present invention has been made in view of such circumstances, and an object thereof is to provide a straddled vehicle including an angle sensor that is properly protected.

First, it has been considered to dispose an angle sensor in front of the pedal. When the angle sensor is disposed in front of the pedal, the angle sensor is disposed in front of the driver's foot. In other words, the driver's foot is located behind the angle sensor. Thus, the driver's foot does not reach the angle sensor. For example, the toes of the driver do not reach the angle sensor. Thus, interference between the angle sensor and the driver's foot is suitably prevented. The angle sensor is properly protected.

However, a new problem arises when the angle sensor is disposed in front of the pedal. A new problem is interference between the angle sensor and the engine. This is because the engine is disposed in front of the pedal.

According to the present invention said object is solved by straddled vehicle having the features of independent claim 1. Preferred embodiments are laid down in the dependent claims.

The straddled vehicle includes the vehicle body frame and the engine. The engine is supported by the vehicle body frame. The engine includes the crankcase and the crankcase cover. The crankcase cover bulges from the crankcase in the transverse direction of the straddled vehicle.

The straddled vehicle includes the rotation shaft, the pedal arm, the pedal, and the angle sensor. The rotation shaft is directly or indirectly supported by the vehicle body frame. The rotation shaft extends in the transverse direction of the straddled vehicle. The pedal arm extends from the rotation shaft. The pedal arm rotates about the rotation shaft. The pedal is attached to the pedal arm. The angle sensor detects a rotation angle of the pedal arm around the rotation shaft.

The angle sensor is disposed in front of the pedal. The pedal is operated by a foot of a driver of the straddled vehicle. Thus, the angle sensor is disposed in front of the driver's foot. In other words, the driver's foot is located behind the angle sensor. Thus, the driver's foot does not reach the angle sensor. Thus, interference between the angle sensor and the driver's foot is suitably prevented. The angle sensor is properly protected.

The angle sensor is disposed below the crankcase cover. Consequently, the angle sensor does not interfere with the crankcase cover. Thus, interference between the angle sensor and the engine is suitably prevented.

At least part of the angle sensor overlaps the crankcase cover in bottom view of the straddled vehicle. Consequently, the angle sensor is installed in an area below the crankcase cover. Thus, the area below the crankcase cover is effectively used for installing the angle sensor.

Hereinafter, the area below the crankcase cover is appropriately referred to as a "first area".

In summary, in the present straddled vehicle, the angle sensor is properly protected. Furthermore, in the present straddled vehicle, interference between the angle sensor and the engine is suitably prevented. Furthermore, in the present straddled vehicle, the first area is effectively used for installing the angle sensor.

It is preferred in the straddled vehicle above that
the rotation shaft overlaps the angle sensor in side view of the straddled vehicle.

In other words, the rotation shaft is disposed at substantially the same position as the angle sensor in side view of the straddled vehicle. Consequently, the rotation shaft is disposed in front of the driver's foot. In other words, the driver's foot is located behind the rotation shaft. Thus, the driver's foot does not reach the rotation shaft. Thus, interference between the rotation shaft and the driver's foot is suitably prevented. The rotation shaft is properly protected.

It is preferred in the straddled vehicle above that
the angle sensor is disposed more inward than the rotation shaft in the transverse direction of the straddled vehicle.

Consequently, the angle sensor is more properly protected.

It is preferred in the straddled vehicle above that
the rotation shaft extends outward in the transverse direction of the straddled vehicle from the angle sensor.

This makes it easy to dispose the angle sensor more inward than the rotation shaft in the transverse direction of the straddled vehicle.

It is preferred in the straddled vehicle above that
the angle sensor is coupled to the rotation shaft.

Consequently, the rotation shaft connects the pedal arm to the angle sensor. Thus, the pedal arm and the angle sensor are connected to each other with a simple structure.

It is preferred in the straddled vehicle above that
the rotation shaft includes
a first end connected to the pedal arm, and
a second end connected to the angle sensor.

This makes it easy for the rotation shaft to connect the pedal arm to the angle sensor.

It is preferred in the straddled vehicle above that
the second end of the rotation shaft is a part of the rotation shaft located innermost in the transverse direction of the straddled vehicle.

In other words, it is preferred that the second end of the rotation shaft is an inner end of the rotation shaft. This makes it easy to dispose the angle sensor more inward than the rotation shaft in the transverse direction of the straddled vehicle.

It is preferred in the straddled vehicle above that
the rotation shaft rotates integrally with the pedal arm, and
the angle sensor detects a rotation angle of the rotation shaft.

The rotation shaft rotates integrally with the pedal arm. Consequently, the rotation angle of the rotation shaft corresponds to the rotation angle of the pedal arm around the rotation shaft. The angle sensor detects a rotation angle of the rotation shaft. This makes it easy for the angle sensor to detect the rotation angle of the pedal arm around the rotation shaft.

It is preferred in the straddled vehicle above that
the angle sensor detects a rotation angle of the pedal arm around the rotation shaft with respect to the vehicle body frame.

Consequently, the angle sensor properly detects the rotation angle of the pedal arm around the rotation shaft.

It is preferred in the straddled vehicle above that
the angle sensor is directly or indirectly supported by the vehicle body frame.

This makes it easy for the angle sensor to detect the rotation angle of the pedal arm around the rotation shaft with respect to the vehicle body frame.

It is preferred in the straddled vehicle above that
the rotation shaft is disposed below the crankcase cover, and
at least part of the rotation shaft overlaps the crankcase cover in bottom view of the straddled vehicle.

The rotation shaft is disposed below the crankcase cover. Consequently, the rotation shaft does not interfere with the crankcase cover. Thus, interference between the rotation shaft and the engine is suitably prevented. At least part of the rotation shaft overlaps the crankcase cover in bottom view of the straddled vehicle. Consequently, the rotation shaft is installed in the first area. Thus, the first area is effectively used for installing the rotation shaft.

It is preferred in the straddled vehicle above that
the rotation shaft is disposed in front of the pedal.

Thus, the driver's foot is located behind the rotation shaft. Thus, the driver's foot does not reach the rotation shaft. Thus, interference between the rotation shaft and the driver's foot is suitably prevented. The rotation shaft is properly protected.

It is preferred in the straddled vehicle above that
the pedal arm extends rearward from the rotation shaft.

This makes it easy to dispose the rotation shaft in front of the pedal.

It is preferred in the straddled vehicle above that
the crankcase cover has an outer end located outermost in the transverse direction of the straddled vehicle, and
the angle sensor is disposed more inward than the outer end of the crankcase cover in the transverse direction of the straddled vehicle.

The crankcase cover has the outer end. The outer end of the crankcase cover is a part of the crankcase cover located outermost in the transverse direction of the straddled vehicle. The angle sensor is disposed more inward than the outer end of the crankcase cover in the transverse direction of the straddled vehicle. Consequently, the angle sensor does not have a part located more outward than the outer end of the crankcase cover in the transverse direction of the straddled vehicle. In other words, the angle sensor does not protrude more outward than the outer end of the crankcase cover in the transverse direction of the straddled vehicle. Thus, the angle sensor is more suitably protected.

It is preferred in the straddled vehicle above that
the rotation shaft is disposed more inward than the outer end of the crankcase cover in the transverse direction of the straddled vehicle.

Consequently, the rotation shaft does not have a part located more outward than the outer end of the crankcase cover in the transverse direction of the straddled vehicle. In other words, the rotation shaft does not protrude more outward than the outer end of the crankcase cover in the transverse direction of the straddled vehicle. Thus, the rotation shaft is more properly protected.

It is preferred in the straddled vehicle above that
the straddled vehicle includes
   a pedal bracket that is directly or indirectly supported by the vehicle body frame and supports the rotation shaft, wherein
the rotation shaft penetrates the pedal bracket in the transverse direction of the straddled vehicle,
the pedal arm is disposed more outward than the pedal bracket in the transverse direction of the straddled vehicle, and
the angle sensor is disposed more inward than the pedal bracket in the transverse direction of the straddled vehicle.

The straddled vehicle includes the pedal bracket. The pedal bracket is directly or indirectly supported by the vehicle body frame. The pedal bracket supports the rotation shaft. Consequently, the rotation shaft is suitably supported by the vehicle body frame. The rotation shaft penetrates the pedal bracket in the transverse direction of the straddled vehicle. This makes it easy for the pedal bracket to support the rotation shaft. The pedal arm is disposed more outward than the pedal bracket in the transverse direction of the straddled vehicle. This makes it easy to dispose the pedal more outward than the pedal bracket in the transverse direction of the straddled vehicle. This makes it easy for the driver to operate the pedal with the driver's foot. The angle sensor is disposed more inward than the pedal bracket in the transverse direction of the straddled vehicle. This makes it easy for the pedal bracket to protect the angle sensor. Thus, the angle sensor is more properly protected.

It is preferred in the straddled vehicle above that
the angle sensor overlaps the pedal bracket in side view of the straddled vehicle.

This makes it even easier for the pedal bracket to protect the angle sensor. Thus, the angle sensor is more properly protected.

It is preferred in the straddled vehicle above that
the angle sensor detects a rotation angle of the pedal arm around the rotation shaft with respect to the pedal bracket.

Consequently, the angle sensor properly detects the rotation angle of the pedal arm around the rotation shaft.

It is preferred in the straddled vehicle above that
the angle sensor is directly or indirectly supported by the pedal bracket.

This makes it easy for the angle sensor to detect the rotation angle of the pedal arm about the rotation shaft with respect to the pedal bracket.

It is preferred in the straddled vehicle above that
the pedal bracket overlaps the pedal in side view of the straddled vehicle.

The pedal bracket thus separates the angle sensor from the pedal. The pedal bracket thus guards the angle sensor from the foot of the driver operating the pedal. Thus, the angle sensor is more properly protected.

It is preferred in the straddled vehicle above that
the straddled vehicle includes a side stand that is directly or indirectly supported by the vehicle body frame, and
the angle sensor is disposed in front of the side stand.

The side stand is operated by the driver's foot. The angle sensor is disposed in front of the side stand. Consequently, even when the side stand is operated by the driver's foot, the driver's foot is located behind the angle sensor. Thus, even when the side stand is operated by the driver's foot, the driver's foot does not reach the angle sensor. Interference between the angle sensor and the driver's foot is thus more suitably prevented. The angle sensor is more properly protected.

It is preferred in the straddled vehicle above that
the straddled vehicle includes
   a stand bracket that is directly or indirectly supported by the vehicle body frame and supports the side stand, wherein
the angle sensor is disposed in front of the stand bracket.

The straddled vehicle includes the stand bracket. The stand bracket is directly or indirectly supported by the vehicle body frame. The stand bracket supports the side stand. Consequently, the side stand is suitably supported by the vehicle body frame. The angle sensor is disposed in front of the stand bracket. This makes it easy to dispose the angle sensor in front of the side stand.

It is preferred in the straddled vehicle above that
the angle sensor is not supported by the stand bracket.

This makes it even easier to dispose the angle sensor in front of the stand bracket.

It is preferred in the straddled vehicle above that
the straddled vehicle includes:
an adapter bracket that is directly or indirectly supported by the vehicle body frame and supports the pedal bracket and the stand bracket; and
a fastening member that fastens the pedal bracket and the stand bracket together to the adapter bracket.

The straddled vehicle includes the adapter bracket. The adapter bracket is directly or indirectly supported by the vehicle body frame. The adapter bracket supports the pedal bracket and the stand bracket. Consequently, the pedal bracket and the stand bracket are suitably supported by the vehicle body frame. The straddled vehicle includes the fastening member. The fastening member fastens the pedal bracket and the stand bracket together to the adapter bracket. Thus, the adapter bracket supports the pedal bracket and the stand bracket with a simple structure. This makes it easy for the adapter bracket to support the pedal bracket and the stand bracket.

It is preferred in the straddled vehicle above that
the engine includes a sprocket cover disposed behind the crankcase cover, and
the angle sensor is disposed below the sprocket cover.

The angle sensor is disposed below the sprocket cover. Consequently, the angle sensor does not interfere with the sprocket cover. Interference between the angle sensor and the engine is thus more suitably prevented.

It is preferred in the straddled vehicle above that
the sprocket cover has an outer end located outermost in the transverse direction of the straddled vehicle, and
the angle sensor is disposed more inward than the outer end of the sprocket cover in the transverse direction of the straddled vehicle.

The sprocket cover has an outer end. The outer end of the sprocket cover is a part of the sprocket cover located outermost in the transverse direction of the straddled vehicle. The angle sensor is disposed more inward than the outer end of the sprocket cover in the transverse direction of the straddled vehicle. Consequently, the angle sensor does not have a part located more outward than the outer end of the sprocket cover in the transverse direction of the straddled vehicle. In other words, the angle sensor does not protrude more outward than the outer end of the sprocket cover in the transverse direction of the straddled vehicle. Thus, the angle sensor is more suitably protected.

It is preferred in the straddled vehicle above that
the straddled vehicle includes an electric wire that is connected to the angle sensor, and
the electric wire is disposed in front of the pedal.

Consequently, the electric wire is disposed in front of the driver's foot. In other words, the driver's foot is located behind the electric wire. Thus, the driver's foot does not reach the electric wire. Interference between the electric wire and the driver's foot is thus suitably prevented. The electric wire is properly protected.

### BRIEF DESCRIPTION OF DRAWINGS

For the purpose of illustrating the present teaching, there are shown in the drawings several forms which are presently preferred.
Fig. 1 is a left side view of a straddled vehicle according to an embodiment.
Fig. 2 is a left side view of part of the straddled vehicle.
Fig. 3 is a left side view of part of the straddled vehicle.
Fig. 4 is a left side view of part of the straddled vehicle.
Fig. 5 is a left side view of part of the straddled vehicle.
Fig. 6 is a left side view of part of the straddled vehicle.
Fig. 7 is a left side view of part of the straddled vehicle.
Fig. 8 is a bottom view of part of the straddled vehicle.
Fig. 9 is a bottom view of part of the straddled vehicle.
Fig. 10 is a rear view of part of the straddled vehicle.
Fig. 11 is a bottom view of part of the straddled vehicle.

### DETAILED DESCRIPTION

A straddled vehicle 1 according to the present teaching will be described hereinafter with reference to the drawings.

### 1. Outline Construction of Straddled Vehicle 1

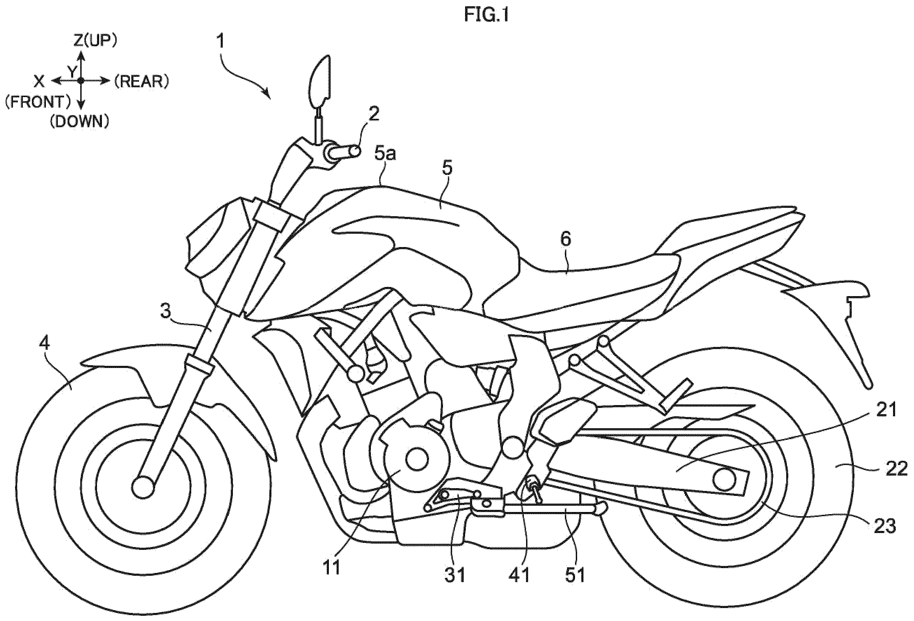

Fig. 1 is a left side view of a straddled vehicle 1 according to an embodiment. The straddled vehicle 1 is, for example, a street type vehicle. A driver (also referred to as a rider) rides on the straddled vehicle 1 and steers the straddled vehicle 1.

Fig. 1 shows a longitudinal direction X, a transverse direction Y, and an up-down direction Z of the straddled vehicle 1. The longitudinal direction X, transverse direction Y, and up-down direction Z are defined with reference to a driver mounted on the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled vehicle 1. Unless otherwise stated in this specification, "forward" and "rearward" include not only directions parallel to the longitudinal direction X but also directions close to the longitudinal direction X. The longitudinal direction X also specifies the forward-rearward direction X of the straddled vehicle. The directions close to the longitudinal direction X are, for example, directions at angles not exceeding 45 degrees to the longitudinal direction X. Similarly, unless otherwise specified, "rightward" and "leftward" include not only directions parallel to the transverse direction Y of the straddled vehicle but also directions close to the transverse direction Y. The transverse direction Y also specifies the right-left direction Y of the straddled vehicle. Unless otherwise specified, "upward" and "downward" include not only directions parallel to the up-down direction Z of the straddled vehicle but also directions close to the up-down direction Z. For reference, the drawings show the terms FRONT, REAR, UP, DOWN, RIGHT, and LEFT, as appropriate.

In the present specification, "in side view of the straddled vehicle 1" is appropriately referred to as "in vehicle side view". Similarly, "in bottom view of the straddled vehicle 1" is appropriately referred to as "in vehicle bottom view". "In rear view of the straddled vehicle 1" is appropriately referred to as "in vehicle rear view".

The straddled vehicle 1 includes a handlebar 2, a front fork 3, and a front wheel 4. The handlebar 2 is disposed at a front part of the straddled vehicle 1. The front fork 3 is connected to the handlebar 2. The front fork 3 extends downward from the handlebar 2. The front wheel 4 is supported by a lower part of the front fork 3.

The straddled vehicle 1 includes a fuel tank 5 and a seat 6. The fuel tank 5 is disposed behind the handlebar 2. The seat 6 is disposed behind the fuel tank 5. At least part of the seat 6 is disposed at the same height position as the fuel tank 5. The fuel tank 5 has an upper end 5a. The entirety of the seat 6 is disposed, for example, lower than the upper end 5a.

The straddled vehicle 1 includes an engine 11. The engine 11 is disposed below the fuel tank 5. The engine 11 is disposed below the seat 6.

The straddled vehicle 1 includes a swing arm 21, a rear wheel 22, and a chain 23. The swing arm 21 is disposed behind the engine 11. The swing arm 21 is disposed below the seat 6. The swing arm 21 extends rearward. The rear wheel 22 is supported by a rear part of the swing arm 21. The chain 23 connects the engine 11 and the rear wheel 22. The chain 23 transmits power from the engine 11 to the rear wheel 22.

The straddled vehicle 1 includes a pedal unit 31, a footrest 41, and a side stand 51. The pedal unit 31, the footrest 41, and the side stand 51 are disposed below the seat 6. The pedal unit 31, the footrest 41, and the side stand 51 are disposed leftward of the engine 11. The pedal unit 31, the footrest 41, and the side stand 51 are disposed in front of the rear wheel 22.

The driver grips the handlebar 2. The driver sits astride the seat 6 and performs a knee grip. The knee grip is to hold a part of the straddled vehicle 1 between both legs of the driver. The part of the straddled vehicle 1 is, for example, the fuel tank 5. The driver places driver's foot on the footrest 41. For example, the driver places the arch of the driver's left foot or the heel of the driver's left foot on the footrest 41. The driver operates the pedal unit 31 with the driver's foot. For example, the driver operates the pedal unit 31 with toes of the driver's left foot.

### 2. Vehicle Body Frame

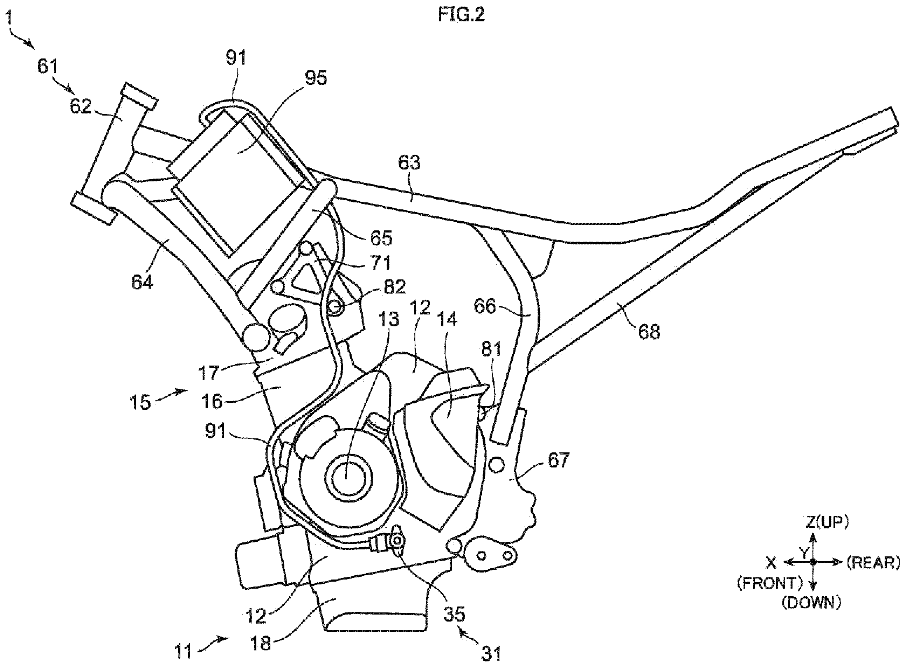

Fig. 2 is a left side view of part of the straddled vehicle 1. The straddled vehicle 1 includes a vehicle body frame 61.

The vehicle body frame 61 includes a head pipe 62, a main frame 63, a first down frame 64, a first stay 65, a second down frame 66, a pivot frame 67, and a second stay 68. The main frame 63 and the first down frame 64 are connected to the head pipe 62. The main frame 63 extends rearward from the head pipe 62. The first down frame 64 extends downward from the head pipe 62. The first stay 65 is connected to the main frame 63 and the first down frame 64. The second down frame 66, the pivot frame 67, and the second stay 68 are disposed behind the first down frame 64 and the first stay 65. The second down frame 66 is connected to the main frame 63. The second down frame 66 extends downward from the main frame 63. The pivot frame 67 and the second stay 68 are connected to the second down frame 66. The pivot frame 67 extends downward from the second down frame 66. The second stay 68 extends rearward and upward from the second down frame 66. The second stay 68 is connected to the main frame 63.

The engine 11 is directly or indirectly supported by the vehicle body frame 61. For example, the engine 11 is directly supported by the pivot frame 67. The engine 11 is connected to the pivot frame 67. For example, the engine 11 is indirectly supported by the first stay 65. The engine 11 is supported by the first stay 65 via an engine bracket 71.

The straddled vehicle 1 includes fastening members 81 and 82. The fastening member 81 fastens the engine 11 to the pivot frame 67. The fastening member 82 fastens the engine 11 to the engine bracket 71.

The engine 11 is fixed to the vehicle body frame 61. The engine 11 is not swingable with respect to the vehicle body frame 61. For example, the engine 11 is not swingable with respect to the pivot frame 67.

### 3. Engine 11

The engine 11 includes a crankcase 12. The crankcase 12 is supported by the pivot frame 67.

The engine 11 includes a crankcase cover 13. At least part of the crankcase cover 13 is disposed at the same height position as the crankcase 12. The crankcase cover 13 overlaps the crankcase 12 in vehicle side view. The crankcase cover 13 is supported by the crankcase 12. The crankcase cover 13 is attached to the crankcase 12. The crankcase 12 and the crankcase cover 13 are aligned in the transverse direction Y. For example, the crankcase cover 13 is disposed leftward of the crankcase 12. The crankcase cover 13 bulges in the transverse direction Y from the crankcase 12. For example, the crankcase cover 13 bulges leftward from the crankcase 12.

The engine 11 includes a sprocket cover 14. At least part of the sprocket cover 14 is disposed at the same height position as the crankcase 12. The sprocket cover 14 overlaps the crankcase 12 in vehicle side view. The sprocket cover 14 is supported by the crankcase 12. The sprocket cover 14 is attached to the crankcase 12. The crankcase 12 and the sprocket cover 14 are aligned in the transverse direction Y. For example, the sprocket cover 14 is disposed leftward of the crankcase 12. The sprocket cover 14 bulges in the transverse direction Y from the crankcase 12. For example, the sprocket cover 14 bulges leftward from the crankcase 12.

At least part of the sprocket cover 14 is disposed at the same height position as the crankcase cover 13. The sprocket cover 14 is disposed behind the crankcase cover 13. At least part of the sprocket cover 14 is disposed more rearward than the entirety of the crankcase cover 13. The sprocket cover 14 does not overlap the crankcase cover 13 in vehicle side view.

The engine 11 includes a cylinder unit 15. The cylinder unit 15 is disposed above the crankcase 12. The cylinder unit 15 is supported by the engine bracket 71. The cylinder unit 15 is connected to the crankcase 12. The cylinder unit 15 extends upward from the crankcase 12.

The cylinder unit 15 includes, for example, a cylinder block 16 and a cylinder head 17. The cylinder block 16 is provided above the crankcase 12. The cylinder block 16 is also referred to as a "cylinder body 16". The cylinder head 17 is provided above the cylinder block 16. Furthermore, the cylinder unit 15 may include a head cover (not illustrated). The head cover is provided, for example, above the cylinder head 17.

The engine 11 includes an oil pan 18. The oil pan 18 is disposed below the crankcase 12. The oil pan 18 is supported by the crankcase 12. The oil pan 18 is connected to the crankcase 12. The oil pan 18 extends downward from the crankcase 12.

Although not illustrated, an internal configuration of the engine 11 will be described. The cylinder unit 15 forms a cylinder hole (not illustrated). The cylinder hole is formed inside the cylinder unit 15. The cylinder unit 15 includes a piston (not illustrated). The piston is installed in the cylinder hole.

The crankcase 12 houses a crankshaft (not illustrated). The crankshaft is connected to the piston. The crankshaft has an axis extending in the transverse direction Y. The crankshaft rotates about the axis of the crankshaft. That is, the crankshaft outputs rotational power.

The crankcase cover 13 is disposed leftward of the crankshaft. The crankcase cover 13 overlaps the crankshaft in vehicle side view. The crankcase cover 13 covers the crankshaft.

The engine 11 may further include a generator (not illustrated). The generator is connected to the crankshaft. The generator is disposed leftward of the crankshaft.

The crankcase cover 13 is disposed leftward of the generator. The crankcase cover 13 overlaps the generator in vehicle side view. The crankcase cover 13 covers a generator (not shown).

The engine 11 further includes a clutch, a transmission, and a drive sprocket (not illustrated). The crankshaft is connected to the drive sprocket via a clutch and a transmission. The clutch connects and disconnects transmission of the rotational power from the crankshaft to the transmission. Specifically, the clutch is switched between the engaged state and the disengaged state. When the clutch is in the engaged state, the clutch transmits rotational power from the crankshaft to the transmission. When the clutch is in the disengaged state, the clutch does not transmit the rotational power from the crankshaft to the transmission. The transmission transmits rotational power from the clutch to the drive sprocket. When the transmission transmits the rotational power from the clutch to the drive sprocket, the transmission changes the rotational speed of the rotational power. The transmission includes a plurality of gears and a shift mechanism. The shift mechanism changes gears. For example, the shift mechanism performs an upshift. For example, the shift mechanism performs a downshift. The shift mechanism selects one gear from a plurality of gears. The transmission transmits rotational power from the crankshaft to the drive sprocket using a gear selected by the shift mechanism. The drive sprocket is rotationally driven by the transmission. The drive sprocket outputs rotational power. The drive sprocket is connected to the chain 23. The drive sprocket drives the rear wheel 22 via the chain 23.

The sprocket cover 14 is disposed leftward of the drive sprocket in vehicle side view. The sprocket cover 14 overlaps the drive sprocket in vehicle side view. The sprocket cover 14 covers the drive sprocket in vehicle side view.

### 4. Pedal unit 31, Footrest 41, and Side Stand 51

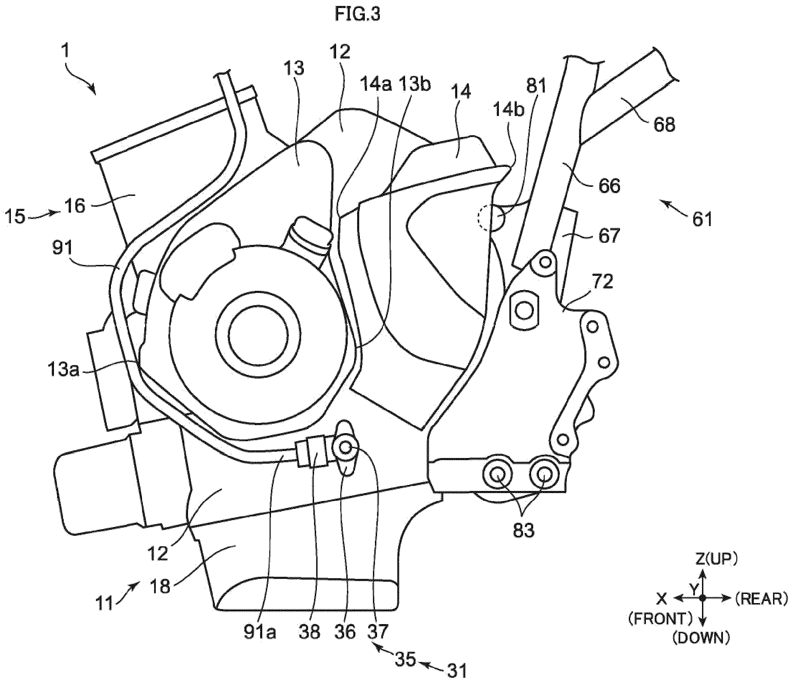

Fig. 3 is a left side view of part of the straddled vehicle 1. The straddled vehicle 1 includes an adapter bracket 72. The adapter bracket 72 is directly or indirectly supported by the vehicle body frame 61. For example, the adapter bracket 72 is directly supported by the pivot frame 67. The adapter bracket 72 is connected to the pivot frame 67.

The straddled vehicle 1 includes a fastening member 83. The fastening member 83 fastens the adapter bracket 72 to the pivot frame 67.

The adapter bracket 72 is fixed to the vehicle body frame 61.

The adapter bracket 72 is not connected to the engine 11. The adapter bracket 72 is spaced apart from the engine 11.

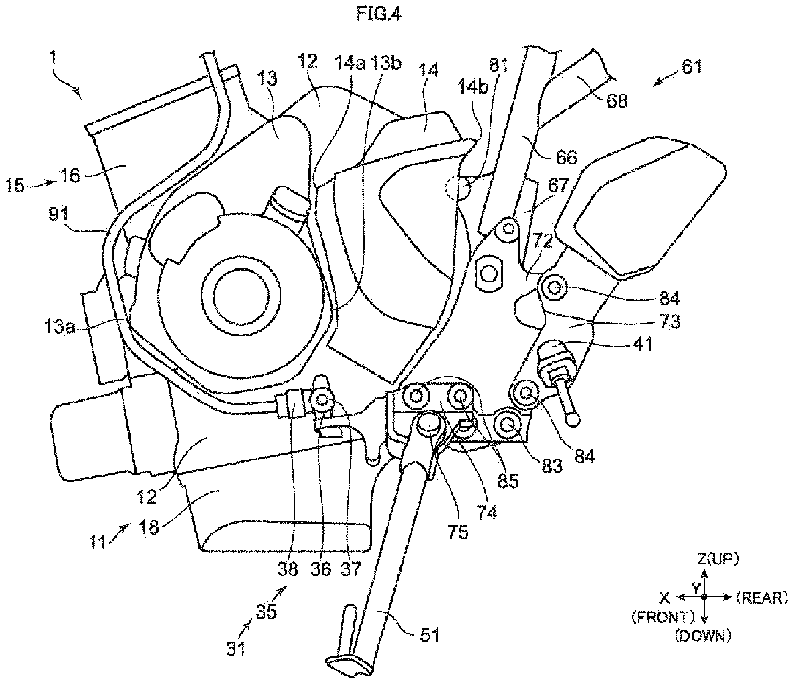

Fig. 4 is a left side view of part of the straddled vehicle 1. The straddled vehicle 1 includes a footrest bracket 73. The footrest bracket 73 is directly or indirectly supported by the vehicle body frame 61. For example, the footrest bracket 73 is indirectly supported by the pivot frame 67. The footrest bracket 73 is supported by the pivot frame 67 via the adapter bracket 72. The footrest bracket 73 is directly supported by the adapter bracket 72. The footrest bracket 73 is connected to the adapter bracket 72.

The straddled vehicle 1 includes a fastening member 84. The fastening member 84 fastens the footrest bracket 73 to the adapter bracket 72.

The footrest bracket 73 is fixed to the adapter bracket 72.

The footrest 41 is directly or indirectly supported by the vehicle body frame 61. For example, the footrest 41 is indirectly supported by the pivot frame 67. The footrest 41 is supported by the pivot frame 67 via the adapter bracket 72 and the footrest bracket 73. The footrest 41 is directly supported by the footrest bracket 73. The footrest 41 is connected to the footrest bracket 73.

The straddled vehicle 1 includes a stand bracket 74. The stand bracket 74 is directly or indirectly supported by the vehicle body frame 61. For example, the stand bracket 74 is indirectly supported by the pivot frame 67. The stand bracket 74 is supported by the pivot frame 67 via the adapter bracket 72. The stand bracket 74 is directly supported by the adapter bracket 72. The stand bracket 74 is connected to the adapter bracket 72.

The straddled vehicle 1 includes a fastening member 85. The fastening member 85 fastens the stand bracket 74 to the adapter bracket 72.

The stand bracket 74 is fixed to the adapter bracket 72.

The side stand 51 is directly or indirectly supported by the vehicle body frame 61. For example, the side stand 51 is indirectly supported by the pivot frame 67. The side stand 51 is supported by the pivot frame 67 via the adapter bracket 72 and the stand bracket 74. The side stand 51 is directly supported by the stand bracket 74. The side stand 51 is connected to the stand bracket 74.

The side stand 51 is rotatable with respect to the stand bracket 74. The side stand 51 is swingable with respect to the stand bracket 74. Specifically, the straddled vehicle 1 includes a support shaft 75. The support shaft 75 is supported by the stand bracket 74. The side stand 51 is supported by the support shaft 75. The side stand 51 rotates about the support shaft 75 with respect to the stand bracket 74.

The side stand 51 is movable between a stowed position and an upright position. Fig. 4 shows the side stand 51 in the upright position. When the side stand 51 is in the upright position, the side stand 51 comes into contact with the road surface. When the side stand 51 is in the upright position, the straddled vehicle 1 leans against the side stand 51, and the side stand 51 keeps the straddled vehicle 1 in the upright position.

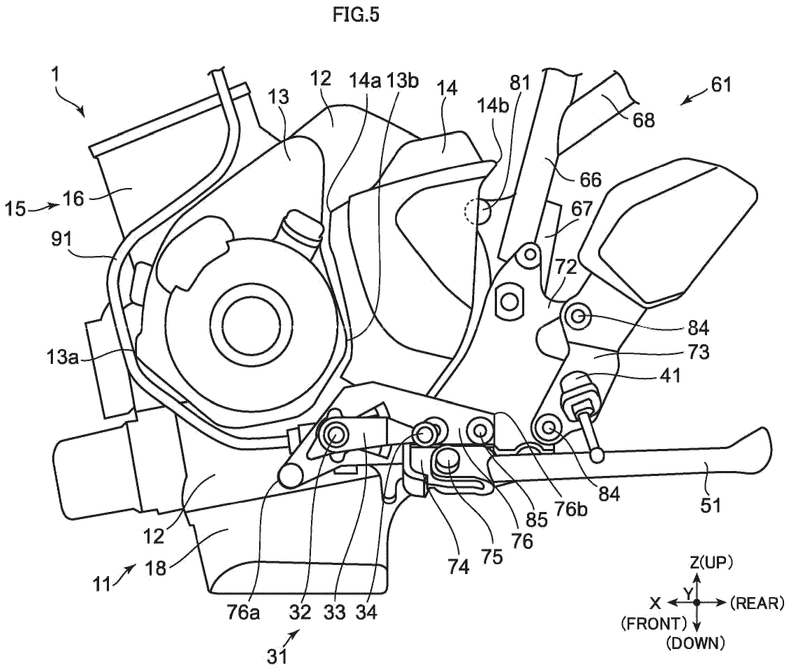

Fig. 5 is a left side view of part of the straddled vehicle 1. Fig. 5 shows the side stand 51 in the stowed position. When the side stand 51 is in the stowed position, the side stand 51 does not come into contact with the road surface. When the side stand 51 is at the stowed position, the side stand 51 allows the straddled vehicle 1 to travel.

The straddled vehicle 1 includes a pedal bracket 76. The pedal bracket 76 is directly or indirectly supported by the vehicle body frame 61. For example, the pedal bracket 76 is indirectly supported by the pivot frame 67. The pedal bracket 76 is supported by the pivot frame 67 via the adapter bracket 72. The pedal bracket 76 is directly supported by the adapter bracket 72. The pedal bracket 76 is connected to the adapter bracket 72.

The pedal bracket 76 is fixed to the adapter bracket 72.

The fastening member 85 fastens the pedal bracket 76 to the adapter bracket 72. The fastening member 85 fastens the pedal bracket 76 and the stand bracket 74 together to the adapter bracket 72. The fastening member 85 joins the adapter bracket 72, the pedal bracket 76, and the stand bracket 74. The pedal bracket 76 and the stand bracket 74 are fastened together to the adapter bracket 72. The pedal bracket 76 and the stand bracket 74 are collectively fastened to the adapter bracket 72.

The pedal unit 31 includes a rotation shaft 32. The rotation shaft 32 is directly or indirectly supported by the vehicle body frame 61. For example, the rotation shaft 32 is indirectly supported by the pivot frame 67. The rotation shaft 32 is supported by the pivot frame 67 via the adapter bracket 72 and the pedal bracket 76. The rotation shaft 32 is directly supported by the pedal bracket 76. The rotation shaft 32 is connected to the pedal bracket 76.

For example, the rotation shaft 32 is rotatable with respect to the pedal bracket 76. The rotation shaft 32 is rotatable with respect to the vehicle body frame 61. The rotation shaft 32 has an axis. The rotation shaft 32 rotates about the axis of the rotation shaft 32.

The pedal unit 31 includes a pedal arm 33. The pedal arm 33 is supported by the rotation shaft 32. The pedal arm 33 is connected to the rotation shaft 32. The pedal arm 33 extends from the rotation shaft 32.

The pedal arm 33 rotates about the rotation shaft 32. The pedal arm 33 swings around the rotation shaft 32. The pedal arm 33 rotates with respect to the pedal bracket 76. The pedal arm 33 is rotatable with respect to the vehicle body frame 61.

For example, the pedal arm 33 is fixed to the rotation shaft 32. The pedal arm 33 rotates integrally with the rotation shaft 32. The pedal arm 33 is not rotatable with respect to the rotation shaft 32.

The pedal unit 31 includes a pedal 34. The pedal 34 is supported by the pedal arm 33. The pedal 34 is attached to the pedal arm 33.

The pedal 34 rotates integrally with the pedal arm 33. The pedal 34 rotates about the rotation shaft 32. The pedal 34 rotates with respect to the pedal bracket 76. The pedal 34 rotates with respect to the vehicle body frame 61.

The pedal 34 moves between an upper position and a lower position. Fig. 5 shows the pedal 34 in the upper position.

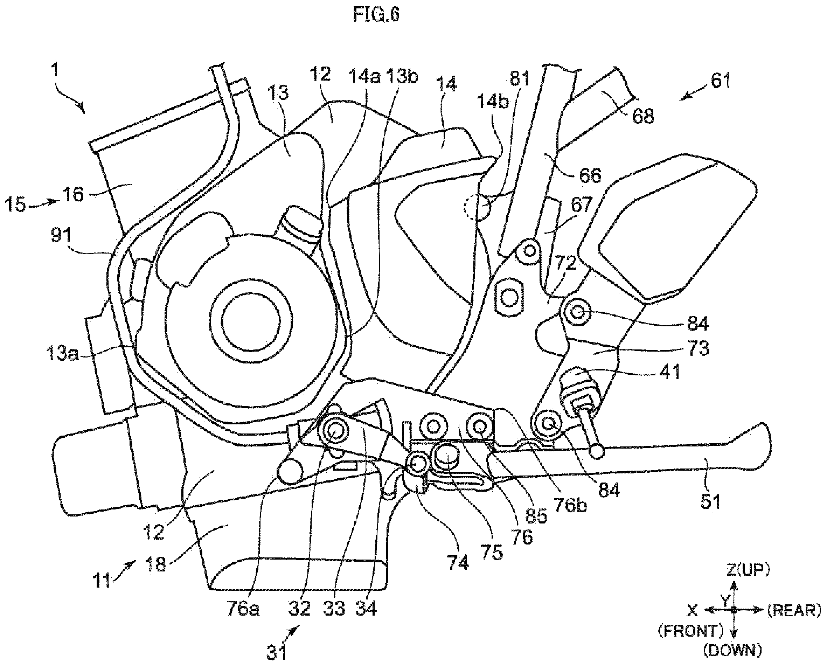

Fig. 6 is a left side view of part of the straddled vehicle 1. Fig. 6 shows the pedal 34 in the lower position. The lower position of the pedal 34 is lower than the upper position of the pedal 34.

Refer to Fig. 3. The pedal unit 31 includes an angle sensor 35. The angle sensor 35 detects a rotation angle of the pedal arm 33 around the rotation shaft 32.

For example, the angle sensor 35 is coupled to the rotation shaft 32. The angle sensor 35 detects a rotation angle of the rotation shaft 32. The rotation angle of the rotation shaft 32 corresponds to the rotation angle of the pedal arm 33 around the rotation shaft 32.

The angle sensor 35 is directly or indirectly supported by the vehicle body frame 61. For example, the angle sensor 35 is indirectly supported by the pivot frame 67. The angle sensor 35 is supported by the pivot frame 67 via the adapter bracket 72 and the pedal bracket 76. The angle sensor 35 is directly supported by the pedal bracket 76. The angle sensor 35 is connected to the pedal bracket 76. The angle sensor 35 detects a rotation angle of the rotation shaft 32 with respect to the pedal bracket 76. Here, the rotation angle of the rotation shaft 32 with respect to the pedal bracket 76 corresponds to the rotation angle of the pedal arm 33 around the rotation shaft 32 with respect to the pedal bracket 76. The rotation angle of the rotation shaft 32 with respect to the pedal bracket 76 corresponds to the rotation angle of the pedal arm 33 around the rotation shaft 32 with respect to the vehicle body frame 61.

The angle sensor 35 is, for example, a rotary potentiometer.

The angle sensor includes a case 36 and a detection shaft 37. The detection shaft 37 is supported by the case 36. The detection shaft 37 is housed in the case 36. The detection shaft 37 is rotatable with respect to the case 36.

The detection shaft 37 is connected to the rotation shaft 32. The detection shaft 37 is fixed to the rotation shaft 32.

The case 36 is connected to the pedal bracket 76. The case 36 is fixed to the pedal bracket 76.

The angle sensor 35 further includes a connector 38. The connector 38 is supported by the case 36. The connector 38 is attached to the case 36.

The straddled vehicle 1 includes an electric wire 91. The electric wire 91 is connected to the angle sensor 35. The electric wire 91 is electrically connected to the angle sensor 35. Specifically, the electric wire 91 is connected to the connector 38. The electric wire 91 is electrically connected to the connector 38.

Refer to Fig. 2. The straddled vehicle 1 includes an electric component 95. The electric component 95 is connected to the electric wire 91. The electric component 95 is electrically connected to the electric wire 91. The electric component 95 is supported by the vehicle body frame 61, for example.

The electric component 95 is, for example, an electronic control unit. The electric component 95 acquires a detection result of the angle sensor 35. The detection result of the angle sensor 35 corresponds to the operation of the pedal 34 by the driver. The electric component 95 controls the engine 11. The electric component 95 controls at least one of the clutch and the transmission. The electric component 95 controls, for example, a shift mechanism.

The pedal unit 31 is not supported by the engine 11. The pedal unit 31 is not connected to the engine 11. The pedal unit 31 does not come into contact with the engine 11. The pedal unit 31 is spaced apart from the engine 11. For example, the angle sensor 35 is not supported by the engine 11. The angle sensor 35 is not connected to the engine 11. The angle sensor 35 does not come into contact with the engine 11. The angle sensor 35 is spaced apart from the engine 11.

The pedal arm 33 and the shift mechanism are not mechanically connected. For example, the straddled vehicle 1 does not include a connecting member for mechanically connecting the pedal arm 33 and the shift mechanism. The connecting member is, for example, a linkage, a rod, or a wire. The connecting member is, for example, for transmitting the rotation of the pedal arm 33 about the rotation shaft 32 to the shift mechanism.

The pedal unit 31 is not supported by the footrest bracket 73. The pedal unit 31 is not connected to the footrest bracket 73. The pedal unit 31 does not come into contact with the footrest bracket 73. The pedal unit 31 is spaced apart from the footrest bracket 73. For example, the rotation shaft 32 is not supported by the footrest bracket 73. The rotation shaft 32 is not connected to the footrest bracket 73. The rotation shaft 32 does not comes into contact with the footrest bracket 73. The rotation shaft 32 is spaced apart from the footrest bracket 73. For example, the angle sensor 35 is not supported by the footrest bracket 73. The angle sensor 35 is not connected to the footrest bracket 73. The angle sensor 35 does not come into contact with the footrest bracket 73. The angle sensor 35 is spaced apart from the footrest bracket 73.

The pedal unit 31 is not supported by the stand bracket 74. The pedal unit 31 is not connected to the stand bracket 74. The pedal unit 31 does not come into contact with the stand bracket 74. The pedal unit 31 is spaced apart from the stand bracket 74. For example, the rotation shaft 32 is not supported by the stand bracket 74. The rotation shaft 32 is not connected to the stand bracket 74. The rotation shaft 32 does not contact the stand bracket 74. The rotation shaft 32 is spaced apart from the stand bracket 74. For example, the angle sensor 35 is not supported by the stand bracket 74. The angle sensor 35 is not connected to the stand bracket 74. The angle sensor 35 does not come into contact with the stand bracket 74. The angle sensor 35 is spaced apart from the stand bracket 74.

An operation example of the straddled vehicle 1 will be briefly described. The driver operates the pedal 34 with the driver's foot. For example, the driver operates the pedal 34 with toes of his/her left foot. When the pedal 34 is operated by the driver, the pedal 34 rotates about the rotation shaft 32. The pedal 34 swings up and down. The pedal 34 moves between an upper position and a lower position. The pedal arm 33 rotates integrally with the pedal 34. The pedal arm 33 rotates about the rotation shaft 32. The pedal arm 33 rotates with respect to the pedal bracket 76. The pedal arm 33 rotates with respect to the vehicle body frame 61. The angle sensor 35 detects a rotation angle of the pedal arm 33 around the rotation shaft 32. The angle sensor 35 outputs a detection result to the electric component 95. The electric component 95 acquires a detection result of the angle sensor 35. The electric component 95 controls the shift mechanism according to the detection result of the angle sensor 35. The electric component 95 causes the shift mechanism to change the gear according to the detection result of the angle sensor 35. Consequently, when the pedal 34 is operated by the driver, the shift mechanism changes gears. For example, when the pedal 34 moves to the upper position, the shift mechanism performs the upshift. When the pedal 34 is moved to the lower position, the shift mechanism performs the downshift.

### 5. Disposing Locations

The disposing location of each element of the straddled vehicle 1 will be described.

Refer to Fig. 3. The adapter bracket 72 will be described. At least part of the adapter bracket 72 is disposed at the same height position as the crankcase 12. The adapter bracket 72 overlaps the crankcase 12 in vehicle side view. For example, a front part of the adapter bracket 72 overlaps a rear part of crankcase 12 in vehicle side view.

At least part of the adapter bracket 72 is disposed at the same height position as the crankcase cover 13. The adapter bracket 72 is disposed behind the crankcase cover 13. The adapter bracket 72 does not overlap the crankcase cover 13 in vehicle side view.

At least part of the adapter bracket 72 is disposed at the same height position as the sprocket cover 14. The adapter bracket 72 is disposed behind the sprocket cover 14. The adapter bracket 72 does not overlap the sprocket cover 14 in vehicle side view.

Refer to Fig. 4. The footrest bracket 73 will be described. At least part of the footrest bracket 73 is disposed at the same height position as the crankcase 12. The footrest bracket 73 is disposed behind the crankcase 12. The footrest bracket 73 does not overlap the crankcase 12 in vehicle side view.

At least part of the footrest bracket 73 is disposed at the same height position as the crankcase cover 13. The footrest bracket 73 is disposed behind the crankcase cover 13. The footrest bracket 73 does not overlap the crankcase cover 13 in vehicle side view.

At least part of the footrest bracket 73 is disposed at the same height position as the sprocket cover 14. The footrest bracket 73 is disposed behind the sprocket cover 14. The footrest bracket 73 does not overlap the sprocket cover 14 in vehicle side view.

At least part of the footrest bracket 73 is disposed at the same height position as the adapter bracket 72. The footrest bracket 73 overlaps the adapter bracket 72 in vehicle side view. For example, the footrest bracket 73 overlaps a rear part of the adapter bracket 72 in vehicle side view. The footrest bracket 73 extends rearward from the adapter bracket 72.

The footrest 41 will be described. At least part of the footrest 41 is disposed at the same height position as the crankcase 12. The footrest 41 is disposed behind the crankcase 12. The footrest 41 does not overlap the crankcase 12 in vehicle side view.

At least part of the footrest 41 is disposed at the same height position as the crankcase cover 13. The footrest 41 is disposed behind the crankcase cover 13. The footrest 41 does not overlap the crankcase cover 13 in vehicle side view.

At least part of the footrest 41 is disposed at the same height position as the sprocket cover 14. The footrest 41 is disposed behind the sprocket cover 14. The footrest 41 does not overlap the sprocket cover 14 in vehicle side view.

At least part of the footrest 41 is disposed at the same height position as the adapter bracket 72. For example, the footrest 41 overlaps the adapter bracket 72 in vehicle side view. For example, the footrest 41 overlaps the rear part of the adapter bracket 72 in vehicle side view. Alternatively, the footrest 41 may not overlap the adapter bracket 72 in vehicle side view.

The footrest 41 overlaps the footrest bracket 73 in vehicle side view.

The stand bracket 74 will be described. At least part of the stand bracket 74 is disposed at the same height position as the crankcase 12. For example, the stand bracket 74 overlaps the crankcase 12 in vehicle side view. For example, at least part of the stand bracket 74 overlaps the rear part of the crankcase 12 in vehicle side view. Alternatively, the stand bracket 74 may not overlap the crankcase 12 in vehicle side view.

The stand bracket 74 is disposed lower than the crankcase cover 13. The stand bracket 74 is disposed more rearward than the crankcase cover 13. The stand bracket 74 does not overlap the crankcase cover 13 in vehicle side view.

The stand bracket 74 is disposed below the sprocket cover 14. At least part of the stand bracket 74 is disposed more rearward than a front end 14a of the sprocket cover 14 and more forward than a rear end 14b of the sprocket cover 14. The entirety of the stand bracket 74 is disposed more rearward than the front end 14a of the sprocket cover 14. The stand bracket 74 does not overlap the sprocket cover 14 in vehicle side view.

The stand bracket 74 overlaps the adapter bracket 72 in vehicle side view. For example, an upper part of the stand bracket 74 overlaps a lower part of the adapter bracket 72 in vehicle side view. The stand bracket 74 extends downward from the adapter bracket 72.

The stand bracket 74 is disposed lower than the footrest bracket 73. The stand bracket 74 is disposed more forward than the footrest bracket 73. The stand bracket 74 does not overlap the footrest bracket 73 in vehicle side view.

The stand bracket 74 is disposed lower than the footrest 41. The stand bracket 74 is disposed more forward than the footrest 41. The stand bracket 74 does not overlap the footrest 41 in vehicle side view.

The fastening member 85 overlaps the adapter bracket 72 in vehicle side view. The fastening member 85 overlaps the lower part of the adapter bracket 72 in vehicle side view.

The fastening member 85 is disposed more forward than the footrest bracket 73 in vehicle side view. The fastening member 85 does not overlap the footrest bracket 73 in vehicle side view.

The fastening member 85 is disposed more forward than the footrest 41 in vehicle side view. The fastening member 85 does not overlap the footrest 41 in vehicle side view.

The fastening member 85 overlaps the stand bracket 74 in vehicle side view. The fastening member 85 overlaps the upper part of the stand bracket 74 in vehicle side view.

The support shaft 75 will be described. At least part of the support shaft 75 is disposed at the same height position as the crankcase 12. For example, the support shaft 75 overlaps the crankcase 12 in vehicle side view. For example, at least part of the support shaft 75 overlaps the rear part of the crankcase 12 in vehicle side view. Alternatively, the support shaft 75 may not overlap the crankcase 12 in vehicle side view.

The support shaft 75 is disposed lower than the crankcase cover 13. The support shaft 75 is disposed more rearward than the crankcase cover 13. The support shaft 75 does not overlap the crankcase cover 13 in vehicle side view.

The support shaft 75 is disposed below the sprocket cover 14. At least part of the support shaft 75 is disposed more rearward than the front end 14a of the sprocket cover 14 and more forward than the rear end 14b of the sprocket cover 14. The entirety of the support shaft 75 is disposed more rearward than the front end 14a of the sprocket cover 14. The support shaft 75 does not overlap the sprocket cover 14 in vehicle side view.

At least part of the support shaft 75 is disposed at the same height position as the adapter bracket 72. The support shaft 75 overlaps the adapter bracket 72 in vehicle side view. For example, at least part of the support shaft 75 overlaps the lower part of the adapter bracket 72 in vehicle side view.

The support shaft 75 is disposed lower than the footrest bracket 73. The support shaft 75 is disposed more forward than the footrest bracket 73. The support shaft 75 does not overlap the footrest bracket 73 in vehicle side view.

The support shaft 75 is disposed lower than the footrest 41. The support shaft 75 is disposed more forward than the footrest 41. The support shaft 75 does not overlap the footrest 41 in vehicle side view.

The support shaft 75 overlaps the stand bracket 74 in vehicle side view. The support shaft 75 overlaps a lower part of the stand bracket 74 in vehicle side view. The support shaft 75 is supported by the lower part of the stand bracket 74.

The support shaft 75 is disposed below the fastening member 85. The support shaft 75 does not overlap the fastening member 85 in vehicle side view.

Refer to Figs. 4 and 5. The side stand 51 will be described. At least part of the side stand 51 is disposed at the same height position as the crankcase 12. For example, the side stand 51 overlaps the crankcase 12 in vehicle side view. For example, at least part of the side stand 51 overlaps the rear part of the crankcase 12 in vehicle side view. Alternatively, the side stand 51 may not overlap the crankcase 12 in vehicle side view.

The side stand 51 is disposed lower than the crankcase cover 13. The side stand 51 is disposed more rearward than the crankcase cover 13. The side stand 51 does not overlap the crankcase cover 13 in vehicle side view.

The side stand 51 is disposed below the sprocket cover 14. At least part of the side stand 51 is disposed more rearward than the front end 14a of the sprocket cover 14 and more forward than the rear end 14b of the sprocket cover 14. The entirety of the side stand 51 is disposed more rearward than the front end 14a of the sprocket cover 14. For example, when the side stand 51 is in the upright position, the entirety of the side stand 51 is disposed more forward than the rear end 14b of the sprocket cover 14. For example, when the side stand 51 is in the stowed position, only part of the side stand 51 is disposed more forward than the rear end 14b of the sprocket cover 14. When the side stand 51 is in the stowed position, the side stand 51 extends from a position more forward than the rear end 14b of the sprocket cover 14 to a position more rearward than the rear end 14b of the sprocket cover 14. The side stand 51 does not overlap the sprocket cover 14 in vehicle side view.

At least part of the side stand 51 is disposed at the same height position as the adapter bracket 72. The side stand 51 overlaps the adapter bracket 72 in vehicle side view. For example, part of the side stand 51 overlaps the lower part of the adapter bracket 72 in vehicle side view.

The side stand 51 is disposed lower than the footrest bracket 73. At least part of the side stand 51 is disposed in front of the footrest bracket 73. At least part of the side stand 51 is disposed more forward than the footrest bracket 73. When the side stand 51 is in the upright position, the entirety of the side stand 51 is disposed more forward than the entirety footrest bracket 73. When the side stand 51 is in the stowed position, only part of the side stand 51 is disposed more forward than the entirety of the footrest bracket 73. When the side stand 51 is in the stowed position, the side stand 51 extends from a position more forward than the entirety of the footrest bracket 73 to a position more rearward than the entirety of the footrest bracket 73. The side stand 51 may overlap the footrest bracket 73 or may not overlap the footrest bracket 73 in vehicle side view.

The side stand 51 is disposed lower than the footrest 41. At least part of the side stand 51 is disposed in front of the footrest 41. At least part of the side stand 51 is disposed more forward than the footrest 41. When the side stand 51 is in the upright position, the entirety of the side stand 51 is disposed more forward than the entirety of the footrest 41. When the side stand 51 is in the stowed position, only part of the side stand 51 is disposed more forward than the entirety of the footrest 41. When the side stand 51 is in the stowed position, the side stand 51 extends from a position more forward than the entirety of the footrest 41 to a position more rearward than the entirety of the footrest 41. The side stand 51 may overlap the footrest 41 or may not overlap the footrest 41 in vehicle side view.

Part of the side stand 51 overlaps the lower part of the stand bracket 74 in vehicle side view. When the side stand 51 is in the upright position, the side stand 51 extends downward from the stand bracket 74. When the side stand 51 is in the stowed position, the side stand 51 extends rearward from the stand bracket 74.

The side stand 51 is disposed below the fastening member 85. The side stand 51 does not overlap the fastening member 85 in vehicle side view.

Part of the side stand 51 overlaps the support shaft 75 in vehicle side view. When the side stand 51 is in the upright position, the side stand 51 extends downward from the support shaft 75. When the side stand 51 is in the stowed position, the side stand 51 extends rearward from the support shaft 75.

Refer to Figs. 5 and 6. The pedal bracket 76 will be described. The pedal bracket 76 has a plate shape perpendicular to the transverse direction Y. The pedal bracket 76 extends in the longitudinal direction X. The pedal bracket 76 has a front end 76a and a rear end 76b.

At least part of the pedal bracket 76 is disposed at the same height position as the crankcase 12. At least part of the pedal bracket 76 overlaps the crankcase 12 in vehicle side view.

The pedal bracket 76 is disposed below the crankcase cover 13. At least part of the pedal bracket 76 is disposed lower than the entirety of the crankcase cover 13. At least part of the pedal bracket 76 is disposed more rearward than a front end 13a of the crankcase cover 13 and more forward than a rear end 13b of the crankcase cover 13. In other words, the front end 76a of the pedal bracket 76 is located more forward than the rear end 13b of the crankcase cover 13, and the rear end 76b of the pedal bracket 76 is located more rearward than the front end 13a of the crankcase cover 13. The entirety of the pedal bracket 76 is disposed more rearward than the front end 13a of the crankcase cover 13. In other words, the front end 76a of the pedal bracket 76 is located more rearward than the front end 13a of the crankcase cover 13. The pedal bracket 76 extends from a position more rearward than the rear end 13b of the crankcase cover 13 to a position more forward than the rear end 13b of the crankcase cover 13. In other words, the front end 76a of the pedal bracket 76 is located more forward than the rear end 13b of the crankcase cover 13, and the rear end 76b of the pedal bracket 76 is located more rearward than the rear end 13b of the crankcase cover 13. The pedal bracket 76 does not overlap the crankcase cover 13 in vehicle side view.

The pedal bracket 76 is disposed below the sprocket cover 14. At least part of the pedal bracket 76 is disposed lower than the entirety of the sprocket cover 14. At least part of the pedal bracket 76 is disposed more rearward than the front end 14a of the sprocket cover 14 and more forward than the rear end 14b of the sprocket cover 14. In other words, the front end 76a of the pedal bracket 76 is located more forward than the rear end 14b of the sprocket cover 14, and the rear end 76b of the pedal bracket 76 is located more rearward than the front end 14a of the sprocket cover 14. For example, the pedal bracket 76 extends from a position more rearward than the front end 14a of the sprocket cover 14 to a position more forward than the front end 14a of the sprocket cover 14. In other words, the front end 76a of the pedal bracket 76 is located more forward than the front end 14a of the sprocket cover 14, and the rear end 76b of the pedal bracket 76 is located more rearward than the front end 14a of the sprocket cover 14. For example, the pedal bracket 76 overlaps the sprocket cover 14 in vehicle side view. An upper part of the pedal bracket 76 overlaps a lower part of the sprocket cover 14 in vehicle side view. Alternatively, the pedal bracket 76 may not overlap the sprocket cover 14 in vehicle side view.

At least part of the pedal bracket 76 is disposed at the same height position as the adapter bracket 72. The pedal bracket 76 overlaps the adapter bracket 72 in vehicle side view. For example, a rear part of the pedal bracket 76 overlaps the lower part of the adapter bracket 72 in vehicle side view. The pedal bracket 76 extends forward from the adapter bracket 72.

The pedal bracket 76 is disposed in front of the footrest bracket 73. The entirety of the pedal bracket 76 is disposed more forward than the entirety of the footrest bracket 73. The pedal bracket 76 does not overlap the footrest bracket 73 in vehicle side view.

The pedal bracket 76 is disposed in front of the footrest 41. The entirety of the pedal bracket 76 is disposed more forward than the entirety of the footrest 41. The pedal bracket 76 does not overlap the footrest 41 in vehicle side view.

At least part of the pedal bracket 76 is disposed at the same height position as the stand bracket 74. The pedal bracket 76 overlaps the stand bracket 74 in vehicle side view. For example, the rear part of the pedal bracket 76 overlaps the upper part of the stand bracket 74 in vehicle side view. The pedal bracket 76 extends forward from the stand bracket 74.

The fastening member 85 overlaps the pedal bracket 76 in vehicle side view. The fastening member 85 overlaps the rear part of the pedal bracket 76 in vehicle side view.

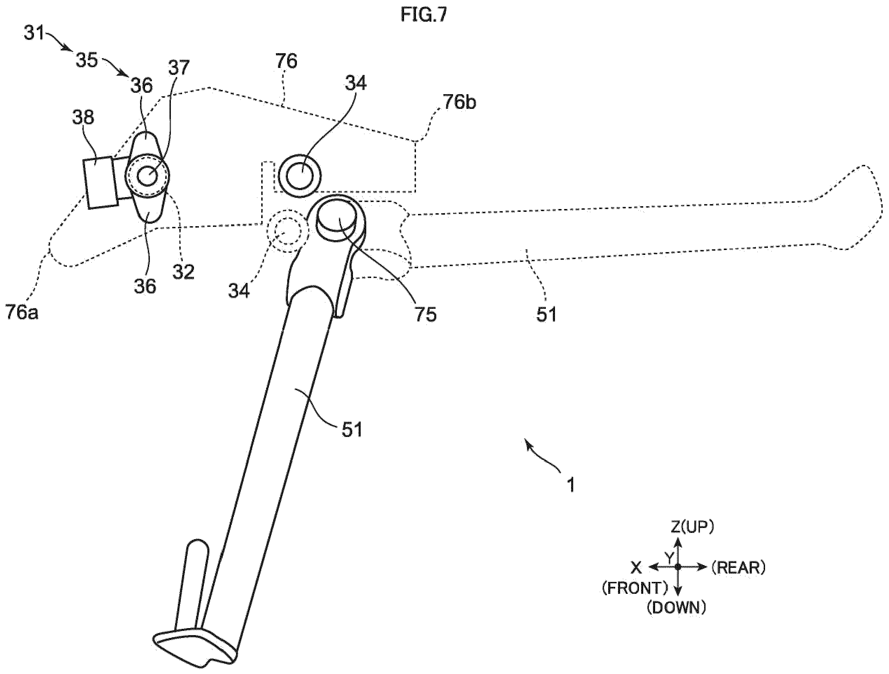

Refer to Figs. 5, 6, and 7. Fig. 7 is a left side view of part of the straddled vehicle 1. In Fig. 7, the pedal bracket 76 and the rotation shaft 32 are indicated by broken lines. Fig. 7 does not illustrate the pedal arm 33. Fig. 7 shows the pedal 34 in the upper position by a continuous line. Fig. 7 shows the pedal 34 in the lower position by a broken line. In Fig. 7, the side stand 51 located in the upright position is indicated by a continuous line. In Fig. 7, the side stand 51 located at the stowed position is indicated by a broken line.

The pedal bracket 76 is disposed above the support shaft 75. At least part of the pedal bracket 76 is disposed higher than the entirety of the support shaft 75. The pedal bracket 76 extends from a position more rearward than the support shaft 75 to a position more forward than the support shaft 75. The front end 76a of the pedal bracket 76 is located more forward than the entirety of the support shaft 75. The rear end 76b of the pedal bracket 76 is located more rearward than the entirety of the support shaft 75. The pedal bracket 76 does not overlap the support shaft 75 in vehicle side view.

The pedal bracket 76 is disposed above the side stand 51. At least part of the pedal bracket 76 is disposed higher than the entirety of the side stand 51. The front end 76a of the pedal bracket 76 is disposed more forward than the entirety of the side stand 51. The rear end 76b of the pedal bracket 76 is disposed more rearward than at least part of the side stand 51. For example, when the side stand 51 is in the upright position, the entirety of the side stand 51 is disposed more forward than the rear end 76b of the pedal bracket 76. For example, when the side stand 51 is in the stowed position, only part of the side stand 51 is disposed more forward than the rear end 76b of the pedal bracket 76. When the side stand 51 is in the stowed position, the side stand 51 extends from a position more forward than the rear end 76b of the pedal bracket 76 to a position more rearward than the rear end 76b of the pedal bracket 76. The pedal bracket 76 does not overlap the side stand 51 in vehicle side view.

The rotation shaft 32 will be described. Refer to Figs. 5 and 6. At least part of the rotation shaft 32 is disposed at the same height position as the crankcase 12. At least part of the rotation shaft 32 overlaps the crankcase 12 in vehicle side view. For example, the entirety of the rotation shaft 32 overlaps the crankcase 12 in vehicle side view.

The rotation shaft 32 is disposed below the crankcase cover 13. At least part of the rotation shaft 32 is disposed lower than the entirety of the crankcase cover 13. At least part of the rotation shaft 32 is disposed more rearward than the front end 13a of the crankcase cover 13 and more forward than the rear end 13b of the crankcase cover 13. The entirety of the rotation shaft 32 is disposed more rearward than the front end 13a of the crankcase cover 13. The rotation shaft 32 does not overlap the crankcase cover 13 in vehicle side view.

The rotation shaft 32 is disposed below the sprocket cover 14. The rotation shaft 32 is disposed lower than the sprocket cover 14. At least part of the rotation shaft 32 is disposed lower than the entirety of the sprocket cover 14. For example, at least part of the rotation shaft 32 is disposed more rearward than the front end 14a of the sprocket cover 14 and more forward than the rear end 14b of the sprocket cover 14. Alternatively, the entirety of the rotation shaft 32 may be disposed more forward than the front end 14a of the sprocket cover 14. The entirety of the rotation shaft 32 is disposed more forward than the rear end 14b of the sprocket cover 14. The rotation shaft 32 does not overlap the sprocket cover 14 in vehicle side view.

At least part of the rotation shaft 32 is disposed at the same height position as the adapter bracket 72. The rotation shaft 32 is disposed in front of the adapter bracket 72. The entirety of the rotation shaft 32 is disposed more forward than the entirety of the adapter bracket 72. The rotation shaft 32 does not overlap the adapter bracket 72 in vehicle side view.

At least part of the rotation shaft 32 is disposed at the same height position as the footrest bracket 73. The rotation shaft 32 is disposed in front of the footrest bracket 73. The entirety of the rotation shaft 32 is disposed more forward than the entirety of the footrest bracket 73. The rotation shaft 32 does not overlap the footrest bracket 73 in vehicle side view.

At least part of the rotation shaft 32 is disposed at the same height as the footrest 41. The rotation shaft 32 is disposed in front of the footrest 41. The entirety of the rotation shaft 32 is disposed more forward than the entirety of the footrest 41. The rotation shaft 32 does not overlap the footrest 41 in vehicle side view.

At least part of the rotation shaft 32 is disposed at the same height position as the stand bracket 74. The rotation shaft 32 is disposed at the same height position as the upper part of the stand bracket 74. The rotation shaft 32 is disposed in front of the stand bracket 74. The entirety of the rotation shaft 32 is disposed more forward than the entirety of the stand bracket 74. The rotation shaft 32 does not overlap the stand bracket 74 in vehicle side view.

At least part of the rotation shaft 32 is disposed at the same height position as the fastening member 85. The rotation shaft 32 is disposed in front of the fastening member 85. The entirety of the rotation shaft 32 is disposed more forward than the fastening member 85. The rotation shaft 32 does not overlap the fastening member 85 in vehicle side view.

Refer to Figs. 5 to 7. The rotation shaft 32 is disposed above the support shaft 75. At least part of the rotation shaft 32 is disposed higher than the entirety of the support shaft 75. The rotation shaft 32 is disposed in front of the support shaft 75. The entirety of the rotation shaft 32 is disposed more forward than the entirety of the support shaft 75. The rotation shaft 32 does not overlap the support shaft 75 in vehicle side view.

The rotation shaft 32 is disposed above the side stand 51. At least part of the rotation shaft 32 is disposed higher than the entirety of the side stand 51. The rotation shaft 32 is disposed in front of the side stand 51. At least part of the rotation shaft 32 is disposed more forward than the entirety of the side stand 51. The rotation shaft 32 does not overlap side stand 51 in vehicle side view.

At least part of the rotation shaft 32 is disposed at the same height position as the pedal bracket 76. The entirety of the rotation shaft 32 is disposed more rearward than the front end 76a of the pedal bracket 76 and more forward than the rear end 76b of the pedal bracket 76. The rotation shaft 32 overlaps the pedal bracket 76 in vehicle side view. The entirety of the rotation shaft 32 overlaps the pedal bracket 76 in vehicle side view. The rotation shaft 32 overlaps a front part of the pedal bracket 76 in vehicle side view. The rotation shaft 32 is supported by the front part of the pedal bracket 76.

The pedal arm 33 will be described. Refer to Figs. 5 and 6. At least part of the pedal arm 33 is disposed at the same height position as the crankcase 12. At least part of the pedal arm 33 overlaps the crankcase 12 in vehicle side view.

The pedal arm 33 is disposed below the crankcase cover 13. At least part of the pedal arm 33 is disposed lower than the entirety of the crankcase cover 13. At least part of the pedal arm 33 is disposed more rearward than the front end 13a of the crankcase cover 13 and more forward than the rear end 13b of the crankcase cover 13. The entirety of the pedal arm 33 is disposed more rearward than the front end 13a of the crankcase cover 13. The pedal arm 33 extends from a position more forward than the rear end 13b of the crankcase cover 13 to a position more rearward than the rear end 13b of the crankcase cover 13. The pedal arm 33 does not overlap the crankcase cover 13 in vehicle side view.

The pedal arm 33 is disposed below the sprocket cover 14. At least part of the pedal arm 33 is disposed lower than the entirety of the sprocket cover 14. At least part of the pedal arm 33 is disposed more rearward than the front end 14a of the sprocket cover 14 and more forward than the rear end 14b of the sprocket cover 14. For example, the pedal bracket 76 extends from a position more forward than the front end 14a of the sprocket cover 14 to a position more rearward than the front end 14a of the sprocket cover 14. The pedal arm 33 does not overlap the sprocket cover 14 in vehicle side view.

At least part of the pedal arm 33 is disposed at the same height position as the adapter bracket 72. At least part of the pedal arm 33 is disposed more forward than the entirety of the adapter bracket 72. The pedal arm 33 does not overlap the adapter bracket 72 in vehicle side view.

At least part of the pedal arm 33 is disposed at the same height position as the footrest bracket 73. The pedal arm 33 is disposed in front of the footrest bracket 73. The entirety of the pedal arm 33 is disposed more forward than the entirety of the footrest bracket 73. For example, the pedal arm 33 does not overlap the footrest bracket 73 in vehicle side view. Alternatively, a rear part of the pedal arm 33 may overlap the footrest bracket 73.

At least part of the pedal arm 33 is disposed at the same height position as the footrest 41. The pedal arm 33 is disposed in front of the footrest 41. The entirety of the pedal arm 33 is disposed more forward than the entirety of the footrest 41. The pedal arm 33 does not overlap the footrest 41 in vehicle side view.

At least part of the pedal arm 33 is disposed at the same height position as the stand bracket 74. The pedal arm 33 is disposed in front of the stand bracket 74. At least part of the pedal arm 33 is disposed more forward than the entirety of the stand bracket 74. The pedal arm 33 overlaps the stand bracket 74. For example, the rear part of the pedal arm 33 overlaps the stand bracket 74.

At least part of the pedal arm 33 is disposed at the same height position as the fastening member 85. The pedal arm 33 is disposed in front of the fastening member 85. At least part of the pedal arm 33 is disposed more forward than the entirety of the fastening member 85. The pedal arm 33 overlaps the fastening member 85. For example, the rear part of the pedal arm 33 overlaps the fastening member 85. For example, when the pedal 34 is in the upper position, the pedal arm 33 overlaps the fastening member 85.

At least part of the pedal arm 33 is disposed higher than the support shaft 75. The pedal arm 33 is disposed in front of the support shaft 75. At least part of the pedal arm 33 is disposed more forward than the support shaft 75. For example, the pedal arm 33 does not overlap the support shaft 75.

At least part of the pedal arm 33 is disposed higher than the side stand 51. The pedal arm 33 is disposed in front of the side stand 51. At least part of the pedal arm 33 is disposed more forward than the side stand 51. For example, the pedal arm 33 does not overlap the side stand 51.

At least part of the pedal arm 33 is disposed at the same height position as the pedal bracket 76. The entirety of the pedal arm 33 is disposed more rearward than the front end 76a of the pedal bracket 76 and more forward than the rear end 76b of the pedal bracket 76. At least part of the pedal arm 33 overlaps the pedal bracket 76 in vehicle side view.

The pedal arm 33 overlaps the rotation shaft 32 in vehicle side view. The pedal arm 33 overlaps the entirety of the rotation shaft 32 in vehicle side view. A front part of the pedal arm 33 overlaps the rotation shaft 32 in vehicle side view. The front part of the pedal arm 33 is connected to the rotation shaft 32. The pedal arm 33 extends from the rotation shaft 32. The pedal arm 33 extends rearward from the rotation shaft 32.

The pedal 34 will be described. Refer to Figs. 5 and 6. At least part of the pedal 34 is disposed at the same height position as the crankcase 12. At least part of the pedal 34 overlaps the crankcase 12 in vehicle side view.

The pedal 34 is disposed lower than the crankcase cover 13. At least part of the pedal 34 is disposed lower than the entirety of the crankcase cover 13. The pedal 34 is disposed more rearward than the crankcase cover 13. For example, the entirety of the pedal 34 is disposed more rearward than the rear end 13b of the crankcase cover 13. The pedal 34 does not overlap the crankcase cover 13 in vehicle side view.

The pedal 34 is disposed below the sprocket cover 14. At least part of the pedal 34 is disposed lower than the entirety of the sprocket cover 14. At least part of the pedal 34 is disposed more rearward than the front end 14a of the sprocket cover 14 and more forward than the rear end 14b of the sprocket cover 14. For example, the entirety of the pedal 34 is disposed more rearward than the front end 14a of the sprocket cover 14 and more forward than the rear end 14b of the sprocket cover 14. The pedal 34 does not overlap the sprocket cover 14 in vehicle side view.

At least part of the pedal 34 is disposed at the same height position as the adapter bracket 72. At least part of the pedal 34 overlaps the adapter bracket 72 in vehicle side view. For example, when the pedal 34 is in the upper position, the pedal 34 overlaps the adapter bracket 72 in vehicle side view.

The pedal 34 is disposed in front of the footrest bracket 73. The entirety of the pedal 34 is disposed more forward than the entirety of the footrest bracket 73. The pedal 34 does not overlap the footrest bracket 73 in vehicle side view.

At least part of the pedal 34 is disposed at the same height position as the footrest 41. The pedal 34 is disposed in front of the footrest 41. The entirety of the pedal 34 is disposed more forward than the entirety of the footrest 41. The pedal 34 does not overlap the footrest 41 in vehicle side view.

At least part of the pedal 34 is disposed at the same height position as the stand bracket 74. At least part of the pedal 34 overlaps the stand bracket 74 in vehicle side view.

When the pedal 34 is in the upper position, at least part the pedal 34 is located at the same height position as the fastening member 85. When the pedal 34 is in the upper position, the pedal 34 overlaps the fastening member 85 in vehicle side view. When the pedal 34 is in the lower position, the pedal 34 is located lower than the fastening member 85. When the pedal 34 is in the lower position, the pedal 34 does not overlap the fastening member 85 in vehicle side view.

Refer to Figs. 5 to 7. When the pedal 34 is in the upper position, at least part of the pedal 34 is disposed higher than the entirety of the support shaft 75. When the pedal 34 is in the lower position, at least part of the pedal 34 is located lower than the entirety of the support shaft 75. At least part of the pedal 34 is disposed more forward than the entirety of the support shaft 75. The pedal 34 does not overlap the support shaft 75 in vehicle side view. The pedal 34 moves up and down in front of the support shaft 75. The pedal 34 moves up and down in an area more forward than the support shaft 75.

When the pedal 34 is in the upper position, at least part of the pedal 34 is located higher than the entirety of the side stand 51. When the pedal 34 is in the lower position, at least part of the pedal 34 is located at the same height position as the side stand 51. At least part of the side stand 51 is disposed more rearward than the entirety of the pedal 34. For example, when the side stand 51 is in the upright position, only part of the side stand 51 is disposed more rearward than the entirety of the pedal 34. When the side stand 51 is in the upright position, the side stand 51 extends from a position more rearward than the entirety of the pedal 34 to a position more forward than the entirety of the pedal 34. When the side stand 51 is in the stowed position, the entirety of the side stand 51 is disposed more rearward than the entirety of the pedal 34. For example, the pedal 34 may overlap the side stand 51 in vehicle side view. Alternatively, the pedal 34 may not overlap the side stand 51 in vehicle side view.

At least part of the pedal 34 is disposed at the same height position as the pedal bracket 76. The entirety of the pedal 34 is disposed more rearward than the front end 76a of the pedal bracket 76 and more forward than the rear end 76b of the pedal bracket 76. At least part of the pedal 34 overlaps the pedal bracket 76 in vehicle side view. The pedal 34 overlaps the rear part of the pedal bracket 76 in vehicle side view. When the pedal 34 is in the upper position, the pedal 34 overlaps the pedal bracket 76 in vehicle side view. When the pedal 34 is in the lower position, the pedal 34 does not overlap the pedal bracket 76 in vehicle side view.

When the pedal 34 is in the upper position, at least part of the pedal 34 is disposed at the same height position as the rotation shaft 32. When the pedal 34 is in the lower position, at least part of the pedal 34 is disposed lower than the entirety of the rotation shaft 32. The pedal 34 is disposed behind the rotation shaft 32. The pedal 34 is disposed more rearward than the rotation shaft 32. The entirety of the pedal 34 is disposed more rearward than the entirety of the rotation shaft 32. In other words, the rotation shaft 32 is disposed in front of the pedal 34. The rotation shaft 32 is disposed more forward than the pedal 34. The entirety of the rotation shaft 32 is disposed more forward than the entirety of the pedal 34. The pedal 34 does not overlap the rotation shaft 32 in vehicle side view.

The pedal 34 overlaps the pedal arm 33 in vehicle side view. The pedal 34 overlaps the rear part of the pedal arm 33 in vehicle side view. The pedal 34 is attached to the rear part of the pedal arm 33.

The angle sensor 35 will be described. Refer to Fig. 3. At least part of the angle sensor 35 is disposed at the same height position as the crankcase 12. At least part of the angle sensor 35 overlaps the crankcase 12 in vehicle side view. For example, the entirety of the angle sensor 35 overlaps the crankcase 12 in vehicle side view.

The angle sensor 35 is disposed below the crankcase cover 13. At least part of the angle sensor 35 is disposed lower than the entirety of the crankcase cover 13. At least part of the angle sensor 35 is disposed more rearward than the front end 13a of the crankcase cover 13 and more forward than of the rear end 13b of the crankcase cover 13. The entirety of the angle sensor 35 is disposed more rearward than the front end 13a of the crankcase cover 13. The angle sensor 35 does not overlap the crankcase cover 13 in vehicle side view.

The angle sensor 35 is disposed below the sprocket cover 14. At least part of the angle sensor 35 is disposed lower than the entirety of the sprocket cover 14. For example, at least part of the angle sensor 35 is disposed more rearward than the front end 14a of the sprocket cover 14 and more forward than the rear end 14b of the sprocket cover 14. Alternatively, the entirety of the angle sensor 35 may be disposed more forward than the front end 14a of the sprocket cover 14. The angle sensor 35 does not overlap the sprocket cover 14 in vehicle side view.

At least part of the angle sensor 35 is disposed at the same height position as the adapter bracket 72. The angle sensor 35 is disposed in front of the adapter bracket 72. The entirety of the angle sensor 35 is disposed more forward than the entirety of the adapter bracket 72. The angle sensor 35 does not overlap the adapter bracket 72 in vehicle side view.

Refer to Fig. 4. The angle sensor 35 is disposed in front of the footrest bracket 73. The entirety of the angle sensor 35 is disposed more forward than the entirety of the footrest bracket 73. The angle sensor 35 does not overlap the footrest bracket 73 in vehicle side view.

At least part of the angle sensor 35 is disposed at the same height position as the footrest 41. The angle sensor 35 is disposed in front of the footrest 41. The entirety of the angle sensor 35 is disposed more forward than the entirety of the footrest 41. The angle sensor 35 does not overlap the footrest 41 in vehicle side view.

The angle sensor 35 is disposed in front of the stand bracket 74. The angle sensor 35 is disposed more forward than the stand bracket 74. The entirety of the angle sensor 35 is disposed more forward than the entirety of the stand bracket 74. The angle sensor 35 does not overlap the stand bracket 74 in vehicle side view.

At least part of the angle sensor 35 is disposed at the same height position as the fastening member 85. The angle sensor 35 is disposed in front of the fastening member 85. The entirety of the angle sensor 35 is disposed more forward than the entirety of the fastening member 85. The angle sensor 35 does not overlap the fastening member 85 in vehicle side view.

Refer to Fig. 7. The angle sensor 35 is disposed above the support shaft 75. At least part of the angle sensor 35 is disposed higher than the entirety of the support shaft 75. The angle sensor 35 is disposed in front of the support shaft 75. The entirety of the angle sensor 35 is disposed more forward than the entirety of the support shaft 75. The angle sensor 35 does not overlap the support shaft 75 in vehicle side view.

The angle sensor 35 is disposed above the side stand 51. At least part of the angle sensor 35 is disposed higher than the entirety of the side stand 51. The angle sensor 35 is disposed in front of the side stand 51. At least part of the angle sensor 35 is disposed more forward than the entirety of the side stand 51. The angle sensor 35 does not overlap the side stand 51 in vehicle side view.

The detection shaft 37 of the angle sensor 35 is located at the center of the case 36 of the angle sensor 35 in vehicle side view. The connector 38 of the angle sensor 35 is disposed in front of the detection shaft 37. The connector 38 is disposed in front of the case 36. The connector 38 extends forward from the case 36. The connector 38 is opened forward.

At least part of the angle sensor 35 is disposed at the same height position as the pedal bracket 76. The entirety of the angle sensor 35 is disposed more rearward than the front end 76a of the pedal bracket 76 and more forward than the rear end 76b of the pedal bracket 76. The entirety of the angle sensor 35 is disposed more rearward than the front end 76a of the pedal bracket 76 and in front of the rear end 76b of the pedal bracket 76. The angle sensor 35 overlaps the pedal bracket 76 in vehicle side view. At least part of the angle sensor 35 overlaps the pedal bracket 76 in vehicle side view. For example, the entirety of the case 36 overlaps the pedal bracket 76 in vehicle side view. The entirety of the detection shaft 37 overlaps the pedal bracket 76 in vehicle side view. At least part of the connector 38 overlaps the pedal bracket 76 in vehicle side view. For example, part of the connector 38 overlaps the pedal bracket 76 in vehicle side view. The other part of the connector 38 does not overlap the pedal bracket 76 in vehicle side view.

At least part of the angle sensor 35 is disposed at the same height position as the rotation shaft 32. The angle sensor 35 overlaps the rotation shaft 32 in vehicle side view. At least part of the angle sensor 35 overlaps the rotation shaft 32 in vehicle side view. For example, the entirety of the detection shaft 37 overlaps the rotation shaft 32 in vehicle side view.

The entirety of the rotation shaft 32 overlaps the angle sensor 35 in vehicle side view. The rotation shaft 32 is disposed at substantially the same position as the angle sensor 35 in vehicle side view. The rotation shaft 32 is disposed at substantially the same position as the detection shaft 37 in vehicle side view. The rotation shaft 32 is disposed coaxially with the detection shaft 37.

Although not illustrated, at least part of the angle sensor 35 is disposed at the same height position as the pedal arm 33. The angle sensor 35 overlaps the pedal arm 33 in vehicle side view. The angle sensor 35 overlaps the front part of the pedal arm 33 in vehicle side view.

At least part of the angle sensor 35 is disposed at the same height position as the pedal 34. For example, when the pedal 34 is in the upper position, at least part of the angle sensor 35 is disposed at the same height position as the pedal 34. The angle sensor 35 is disposed in front of the pedal 34. The angle sensor 35 is disposed more forward than the pedal 34. The entirety of the angle sensor 35 is disposed more forward than the entirety of the pedal 34. The angle sensor 35 does not overlap the pedal 34 in vehicle side view.

The electric wire 91 will be described. Refer to Fig. 3. The electric wire 91 extends forward from the angle sensor 35. The electric wire 91 extends forward from the connector 38.

The electric wire 91 has a first end 91a. The first end 91a is connected to the connector 38. The first end 91a extends forward from the connector 38. The first end 91a is disposed in front of the connector 38.

The first end 91a overlaps the crankcase 12 in vehicle side view.

The first end 91a is disposed below the crankcase cover 13. The first end 91a is disposed more rearward than the front end 13a of the crankcase cover 13 and more forward than the rear end 13b of the crankcase cover 13. The electric wire 91 does not overlap the crankcase cover 13 in vehicle side view.

The first end 91a is disposed lower than the sprocket cover 14. The first end 91a is disposed more forward than the sprocket cover 14. The first end 91a does not overlap the sprocket cover 14 in vehicle side view.

The electric wire 91 extends forward from the angle sensor 35 in an area below crankcase cover 13. The electric wire 91 extends from the angle sensor 35 to a position more forward than the crankcase cover 13 in the area below the crankcase cover 13. The electric wire 91 extends from the area below the crankcase cover 13 to an area in front of the crankcase cover 13. Further, the electric wire 91 extends from a position lower than the crankcase cover 13 to a position higher than the crankcase cover 13 in the area in front of the crankcase cover 13. The electric wire 91 does not overlap the crankcase cover 13 in vehicle side view. Not only the first end 91a but also the entirety of the electric wire 91 does not overlap the crankcase cover 13 in vehicle side view. The electrical wire 91 does not have a portion that overlaps the crankcase cover 13 in vehicle side view.

The electric wire 91 is disposed in front of the sprocket cover 14. The electric wire 91 does not overlap the sprocket cover 14 in vehicle side view. Not only the first end 91a but also the entirety of the electric wire 91 does not overlap the sprocket cover 14 in vehicle side view. The electrical wire 91 does not have a portion that overlaps the sprocket cover 14 in vehicle side view.

Refer to Fig. 2. The electric wire 91 extends to a position higher than the engine 11. The electric wire 91 is electrically connected to the electric component 95.

The electric wire 91 is disposed in front of the angle sensor 35. The entirety of the electric wire 91 is disposed more forward than the entirety of the angle sensor 35.

As described above, the rotation shaft 32 is disposed at substantially the same position as the angle sensor 35 in vehicle side view. Consequently, the electric wire 91 is disposed in front of the rotation shaft 32. The entirety of the electric wire 91 is disposed more forward than the entirety of the rotation shaft 32.

As described above, the pedal arm 33 extends rearward from the rotation shaft 32. Consequently, the electric wire 91 is disposed in front of the pedal arm 33. The entirety of the electric wire 91 is disposed more forward than the entirety of the pedal arms 33.

As described above, the pedal 34 is disposed behind the angle sensor 35. Consequently, the electric wire 91 is disposed in front of the pedal 34. The electric wire 91 is disposed more forward than the pedal 34. The entirety of the electric wire 91 is disposed more forward than the pedal 34.

The electric component 95 will be described. The electric component 95 is disposed above the crankcase 12. The electric component 95 does not overlap the crankcase 12 in vehicle side view.

The electric component 95 is disposed above the crankcase cover 13. The electric component 95 does not overlap the crankcase cover 13 in vehicle side view.

The electric component 95 is disposed above the engine 11. The electric component 95 does not overlap the engine 11 in vehicle side view.

The electric component 95 is disposed above the angle sensor 35. The entirety of the electric component 95 is disposed higher than the entirety of the angle sensor 35. The electric component 95 is disposed in front of the angle sensor 35. The entirety of the electric component 95 is disposed more forward than the entirety of the angle sensor 35. The electric component 95 does not overlap the angle sensor 35 in vehicle side view.

The disposing location of each element of the straddled vehicle 1 in vehicle bottom view will be described.

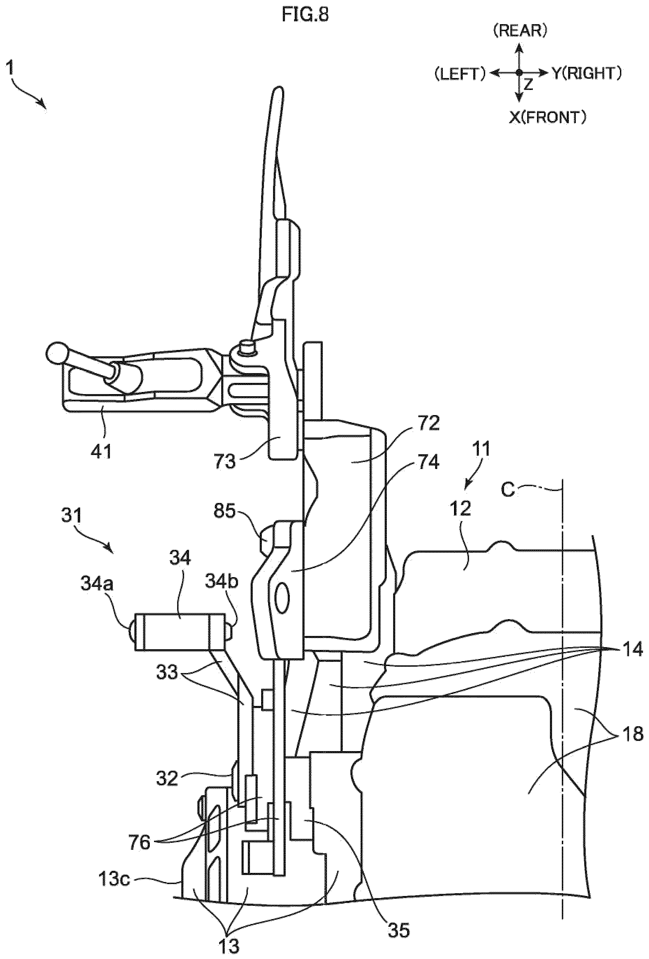

Fig. 8 is a bottom view of part of the straddled vehicle 1. Fig. 8 illustrates a vehicle center plane C. The vehicle center plane C is a virtual plane. The vehicle center plane C is perpendicular to the transverse direction Y. The vehicle center plane C passes through the center of the straddled vehicle 1 in the transverse direction Y. One direction in the transverse direction Y which approaches the vehicle center plane C is referred to as "inward in the transverse direction Y". The other direction in the transverse direction Y which is away from the vehicle center plane C is referred to as "outward in the transverse direction Y".

The crankcase 12 intersects the vehicle center plane C.

The crankcase cover 13 does not intersect the vehicle center plane C. The crankcase cover 13 is disposed leftward of the vehicle center plane C. The crankcase cover 13 is connected to the crankcase 12. The crankcase 12 and the crankcase cover 13 are aligned in the transverse direction Y. The crankcase cover 13 is disposed more outward than the crankcase 12 in the transverse direction Y. For example, the crankcase cover 13 is disposed leftward of the crankcase 12. The crankcase cover 13 bulges outward in the transverse direction Y from the crankcase 12. For example, the crankcase cover 13 bulges leftward from the crankcase 12.

The sprocket cover 14 does not intersect the vehicle center plane C. The sprocket cover 14 is disposed leftward of the vehicle center plane C. The sprocket cover 14 is connected to the crankcase 12. The crankcase 12 and the sprocket cover 14 are aligned in the transverse direction Y. The sprocket cover 14 is disposed more outward than the crankcase 12 in the transverse direction Y. For example, the sprocket cover 14 is disposed leftward of the crankcase 12. The sprocket cover 14 bulges outward in the transverse direction Y from the crankcase 12. For example, the sprocket cover 14 bulges leftward from the crankcase 12.

The adapter bracket 72 does not intersect the vehicle center plane C. The adapter bracket 72 is disposed leftward of the vehicle center plane C. The adapter bracket 72 is disposed more outward than the crankcase 12 in the transverse direction Y. For example, the adapter bracket 72 is disposed leftward of the crankcase 12.

The footrest bracket 73 does not intersect the vehicle center plane C. The footrest bracket 73 is disposed leftward of the vehicle center plane C. The footrest bracket 73 is disposed more outward than the crankcase 12 in the transverse direction Y. For example, the footrest bracket 73 is disposed leftward of the crankcase 12. The footrest bracket 73 is disposed more outward than the adapter bracket 72 in the transverse direction Y. For example, the footrest bracket 73 is disposed leftward of the adapter bracket 72.

The footrest 41 does not intersect the vehicle center plane C. The footrest 41 is disposed leftward of the vehicle center plane C. The footrest 41 is disposed more outward than the crankcase 12 in the transverse direction Y. For example, the footrest 41 is disposed leftward of the crankcase 12. The footrest 41 is disposed more outward than the footrest bracket 73 in the transverse direction Y. For example, the footrest 41 is disposed leftward of the footrest bracket 73. The footrest 41 extends in the transverse direction Y. The footrest 41 extends outward in the transverse direction Y from the footrest bracket 73. For example, the footrest 41 extends leftward from the footrest bracket 73.

The stand bracket 74 does not intersect the vehicle center plane C. The stand bracket 74 is disposed leftward of the vehicle center plane C. The stand bracket 74 is disposed more outward than the crankcase 12 in the transverse direction Y. For example, the stand bracket 74 is disposed leftward of the crankcase 12. The stand bracket 74 is disposed outward of the adapter bracket 72 in the transverse direction Y. For example, the stand bracket 74 is disposed more leftward than the adapter bracket 72.

The fastening member 85 does not intersect the vehicle center plane C. The fastening member 85 is disposed leftward of the vehicle center plane C. The fastening member 85 is disposed more outward than the crankcase 12 in the transverse direction Y. For example, the fastening member 85 is disposed leftward of the crankcase 12.

The pedal bracket 76 does not intersect the vehicle center plane C. The pedal bracket 76 is disposed leftward of the vehicle center plane C. The pedal bracket 76 is disposed more outward than the crankcase 12 in the transverse direction Y. For example, the pedal bracket 76 is disposed leftward of the crankcase 12. The pedal bracket 76 is disposed more outward than the adapter bracket 72 in the transverse direction Y. For example, the pedal bracket 76 is disposed leftward of the adapter bracket 72.

The pedal unit 31 does not intersect the vehicle center plane C. The pedal unit 31 is disposed leftward of the vehicle center plane C. The pedal unit 31 is disposed more outward than the crankcase 12 in the transverse direction Y. For example, the pedal unit 31 is disposed leftward of the crankcase 12. The pedal unit 31 is disposed in front of the footrest 41.

The pedal arm 33 is disposed more outward than the pedal bracket 76 in the transverse direction Y. The entirety of the pedal arm 33 is disposed more outward than the entirety of the pedal bracket 76 in the transverse direction Y. In other words, the distance between the pedal arm 33 and the vehicle center plane C is larger than the distance between the pedal bracket 76 and the vehicle center plane C. For example, the pedal arm 33 is disposed leftward of the pedal bracket 76. The entirety of the pedal arm 33 is disposed more leftward than the entirety of the pedal bracket 76.

The pedal 34 is disposed more outward than the pedal bracket 76 in the transverse direction Y. The entirety of the pedal 34 is disposed more outward than the entirety of the pedal bracket 76 in the transverse direction Y. In other words, the distance between the pedal 34 and the vehicle center plane C is larger than the distance between the pedal bracket 76 and the vehicle center plane C. For example, the pedal 34 is disposed leftward of the pedal bracket 76. The entirety of the pedal 34 is disposed more leftward than the entirety of the pedal bracket 76.

The pedal 34 is disposed more outward than the pedal arm 33 in the transverse direction Y. In other words, the distance between the pedal 34 and the vehicle center plane C is larger than the distance between the pedal arm 33 and the vehicle center plane C. For example, the pedal 34 is disposed leftward of the pedal arm 33.

The pedal 34 extends in the transverse direction Y. The pedal 34 extends outward from the pedal arm 33 in the transverse direction Y. For example, the pedal 34 extends leftward from the pedal arm 33.

The angle sensor 35 is disposed more inward than the pedal bracket 76 in the transverse direction Y. The entirety of the angle sensor 35 is disposed more inward than the entirety of the pedal bracket 76 in the transverse direction Y. In other words, the distance between the angle sensor 35 and the vehicle center plane C is smaller than the distance between the pedal bracket 76 and the vehicle center plane C. For example, the angle sensor 35 is disposed rightward of the pedal bracket 76. The entirety of the angle sensor 35 is disposed more rightward than the entirety of the pedal bracket 76.

The angle sensor 35 is disposed more inward than the pedal arm 33 in the transverse direction Y. The entirety of the angle sensor 35 is disposed more inward than the entirety of the pedal arm 33 in the transverse direction Y. In other words, the distance between the angle sensor 35 and the vehicle center plane C is smaller than the distance between the pedal arm 33 and the vehicle center plane C. For example, the angle sensor 35 is disposed rightward of the pedal arm 33. The entirety of the angle sensor 35 is disposed more rightward than the entirety of the pedal arm 33.

The angle sensor 35 is disposed more inward than the pedal 34 in the transverse direction Y. The entirety of the angle sensor 35 is disposed more inward than the entirety of the pedal 34 in the transverse direction Y. In other words, the distance between the angle sensor 35 and the vehicle center plane C is smaller than the distance between the pedal 34 and the vehicle center plane C. For example, the angle sensor 35 is disposed rightward of the pedal 34. The entirety of the angle sensor 35 is disposed more rightward than the entirety of the pedal 34.

The angle sensor 35 is disposed more inward than the footrest 41 in the transverse direction Y. The entirety of the angle sensor 35 is disposed more inward than the entirety of the footrest 41 in the transverse direction Y. In other words, the distance between the angle sensor 35 and the vehicle center plane C is smaller than the distance between the footrest 41 and the vehicle center plane C. For example, the angle sensor 35 is disposed rightward of the footrest 41. The entirety of the angle sensor 35 is disposed more rightward than the entirety of the footrest 41.

As described above, the driver places the arch of the driver's foot or the heel of the driver's foot on the footrest 41. The driver operates the pedal 34 with the toes of the driver's foot. Consequently, the angle sensor 35 is located more inward than the driver's foot in the transverse direction Y. The entirety of the angle sensor 35 is located more inward than the entirety of the driver's foot in the transverse direction Y. For example, the angle sensor 35 is located more rightward than the driver's left foot. The entirety of the angle sensor 35 is located more rightward than the entirety of the driver's left foot.

Furthermore, the angle sensor 35 is located in front of the driver's foot. The entirety of the angle sensor 35 is located more forward than the entirety of the driver's foot.

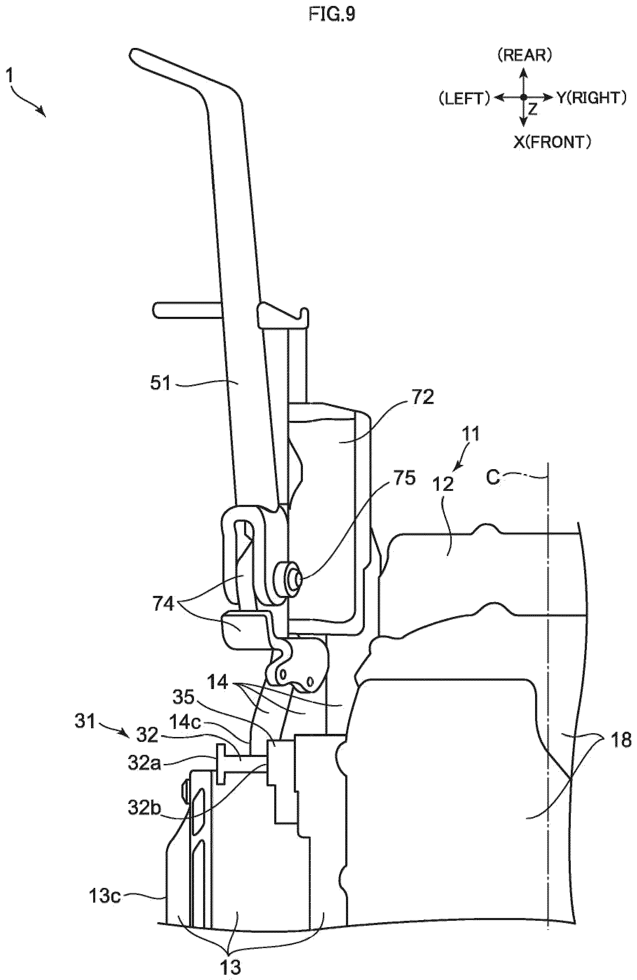

Fig. 9 is a bottom view of part of the straddled vehicle 1. Fig. 9 does not illustrate the footrest bracket 73 and the footrest 41. Fig. 9 clearly illustrates the support shaft 75 and the side stand 51.

The support shaft 75 does not intersect the vehicle center plane C. For example, the support shaft 75 is disposed leftward of the vehicle center plane C. The support shaft 75 is disposed more outward than the crankcase 12 in the transverse direction Y. For example, the support shaft 75 is disposed leftward of the crankcase 12.

The side stand 51 does not intersect the vehicle center plane C. For example, the side stand 51 is disposed leftward of the vehicle center plane C. The side stand 51 is disposed more outward than the crankcase 12 in the transverse direction Y. For example, the side stand 51 is disposed leftward of the crankcase 12.

Fig. 9 does not illustrate the pedal bracket 76 and the pedal arm 33. Fig. 9 clearly illustrates the rotation shaft 32.

The rotation shaft 32 extends in the transverse direction Y. The axis of the rotation shaft 32 extends in the transverse direction Y. The rotation shaft 32 penetrates the pedal bracket 76 in the transverse direction Y. The rotation shaft 32 penetrates the pedal arm 33 in the transverse direction Y.

The rotation shaft 32 is connected to the angle sensor 35. The rotation shaft 32 is connected to the pedal arm 33. The rotation shaft 32 connects the pedal arm 33 to the angle sensor 35. The pedal arm 33 and the angle sensor 35 are connected via the rotation shaft 32. For example, the pedal arm 33 and the angle sensor 35 are connected only via the rotation shaft 32. The pedal arm 33 and the angle sensor 35 are connected without a linkage.

The angle sensor 35 is disposed more inward than the rotation shaft 32 in the transverse direction Y. The entirety of the angle sensor 35 is disposed more inward than the entirety of the rotation shaft 32 in the transverse direction Y. In other words, the distance between the angle sensor 35 and the vehicle center plane C is smaller than the distance between the rotation shaft 32 and the vehicle center plane C. For example, the angle sensor 35 is disposed rightward of the rotation shaft 32. The entirety of the angle sensor 35 is disposed more rightward than the entirety of the rotation shaft 32.

The rotation shaft 32 extends outward from the angle sensor 35 in the transverse direction Y. For example, the rotation shaft 32 extends leftward from the angle sensor 35.

The rotation shaft 32 has a first end 32a and a second end 32b. The first end 32a is connected to the pedal arm 33. The second end 32b is connected to the angle sensor 35.

The first end 32a is an outer end of the rotation shaft 32. The first end 32a is a part of the rotation shaft 32 located on the outermost side in the transverse direction Y. In other words, the first end 32a is a part of the rotation shaft 32 farthest from the vehicle center plane C. For example, the first end 32a is a left end of the rotation shaft 32.

The second end 32b is an inner end of the rotation shaft 32. The second end 32b is part of the rotation shaft 32 located innermost in the transverse direction Y. In other words, the second end 32b is a part of the rotation shaft 32 closest to the vehicle center plane C. For example, the second end 32b is a right end of the rotation shaft 32.

The rotation shaft 32 is located more inward than the pedal 34 in the transverse direction Y. The entirety of the rotation shaft 32 is located more inward than the entirety of the pedal 34 in the transverse direction Y. In other words, the distance between the rotation shaft 32 and the vehicle center plane C is smaller than the distance between the pedal 34 and the vehicle center plane C. For example, the rotation shaft 32 is disposed rightward of the pedal 34. The entirety of the rotation shaft 32 is disposed more rightward than the entirety of the pedal 34.

Refer to Figs. 8 and 9. The entirety of the pedal bracket 76 is disposed more outward than the entirety of the crankcase 12 in the transverse direction Y. For example, the entirety of the pedal bracket 76 is disposed more leftward than the entirety of the crankcase 12. The pedal bracket 76 does not overlap the crankcase 12 in vehicle bottom view.

The entirety of the pedal unit 31 is disposed more outward than the entirety of the crankcase 12 in the transverse direction Y. For example, the entirety of the pedal unit 31 is disposed more leftward than the entirety of the crankcase 12. The pedal unit 31 does not overlap the crankcase 12 in vehicle bottom view.

Therefore, the rotation shaft 32 is disposed more outward than the crankcase 12 in the transverse direction Y. The entirety of the rotation shaft 32 is disposed more outward than the entirety of the crankcase 12 in the transverse direction Y. For example, the rotation shaft 32 is disposed leftward of the crankcase 12. The entirety of the rotation shaft 32 is disposed more leftward than the entirety of the crankcase 12. The rotation shaft 32 does not overlap the crankcase 12 in vehicle bottom view.

Similarly, the pedal 34 is disposed more outward than the crankcase 12 in the transverse direction Y. The entirety of the pedal 34 is disposed more outward than the entirety of the crankcase 12 in the transverse direction Y. For example, the pedal 34 is disposed leftward of the crankcase 12. The entirety of the pedal 34 is disposed more leftward than the entirety of the crankcase 12. The pedal 34 does not overlap the crankcase 12 in vehicle bottom view.

The angle sensor 35 is disposed more outward than the crankcase 12 in the transverse direction Y. The entirety of the angle sensor 35 is disposed more outward than the entirety of the crankcase 12 in the transverse direction Y. For example, the angle sensor 35 is disposed leftward of the crankcase 12. The entirety of the angle sensor 35 is disposed more leftward than the entirety of the crankcase 12. The angle sensor 35 does not overlap the crankcase 12 in vehicle bottom view.

At least part of the pedal bracket 76 overlaps the crankcase cover 13 in vehicle bottom view.

At least part of the pedal unit 31 overlaps the crankcase cover 13 in vehicle bottom view.

At least part of the rotation shaft 32 overlaps the crankcase cover 13 in vehicle bottom view. For example, the entirety of the rotation shaft 32 overlaps the crankcase cover 13 in vehicle bottom view.

At least part of the pedal arm 33 overlaps the crankcase cover 13 in vehicle bottom view.

The pedal 34 does not overlap the crankcase cover 13 in vehicle bottom view.

At least part of the angle sensor 35 overlaps the crankcase cover 13 in vehicle bottom view. For example, the entirety of the angle sensor 35 overlaps the crankcase cover 13 in vehicle bottom view.

Although not illustrated, at least part of the first end 91a of the electric wire 91 overlaps the crankcase cover 13 in vehicle bottom view. For example, the entirety of the first end 91a overlaps the crankcase cover 13 in vehicle bottom view.

At least part of the pedal bracket 76 overlaps the sprocket cover 14 in vehicle bottom view.

At least part of the pedal unit 31 overlaps the sprocket cover 14 in vehicle bottom view.

For example, at least part of the rotation shaft 32 may overlap the sprocket cover 14 in vehicle bottom view. Alternatively, the rotation shaft 32 may not overlap the sprocket cover 14 in vehicle bottom view.

The pedal arm 33 does not overlap the sprocket cover 14 in vehicle bottom view.

The pedal 34 does not overlap the sprocket cover 14 in vehicle bottom view.

For example, at least part of the angle sensor 35 may overlap the sprocket cover 14 in vehicle bottom view. Alternatively, the angle sensor 35 may not overlap the sprocket cover 14 in vehicle bottom view.

The rotation shaft 32 does not overlap the adapter bracket 72 in vehicle bottom view. The rotation shaft 32 does not overlap the footrest bracket 73 in vehicle bottom view. The rotation shaft 32 does not overlap the footrest 41 in vehicle bottom view. The rotation shaft 32 does not overlap the stand bracket 74 in vehicle bottom view. The rotation shaft 32 does not overlap the support shaft 75 in vehicle bottom view. The rotation shaft 32 does not overlap the side stand 51 in vehicle bottom view. The rotation shaft 32 overlaps the pedal bracket 76 in vehicle bottom view.

The pedal arm 33 does not overlap the adapter bracket 72 in vehicle bottom view. The pedal arm 33 does not overlap the footrest bracket 73 in vehicle bottom view. The pedal arm 33 does not overlap the footrest 41 in vehicle bottom view. The pedal arm 33 does not overlap the stand bracket 74 in vehicle bottom view. The pedal arm 33 may overlap the support shaft 75 or may not overlap the support shaft 75 in vehicle bottom view. The pedal arm 33 may overlap the side stand 51 or may not overlap the side stand 51 in vehicle bottom view. The pedal arm 33 may overlap the pedal bracket 76 or may not overlap the pedal bracket 76 in vehicle bottom view.

The pedal arm 33 overlaps the rotation shaft 32 in vehicle bottom view.

The pedal 34 does not overlap the adapter bracket 72 in vehicle bottom view. The pedal 34 does not overlap the footrest bracket 73 in vehicle bottom view. The pedal 34 does not overlap the footrest 41 in vehicle bottom view. The pedal 34 does not overlap the stand bracket 74 in vehicle bottom view. The pedal 34 may overlap the support shaft 75 or may not overlap the support shaft 75 in vehicle bottom view. The pedal 34 may overlap the side stand 51 or may not overlap the side stand 51 in vehicle bottom view. The pedal 34 does not overlap the pedal bracket 76 in vehicle bottom view.

The pedal 34 does not overlap the rotation shaft 32 in vehicle bottom view. The pedal 34 may overlap the pedal arm 33 or may not overlap the pedal arm 33 in vehicle bottom view.

The angle sensor 35 does not overlap the adapter bracket 72 in vehicle bottom view. The angle sensor 35 does not overlap the footrest bracket 73 in vehicle bottom view. The angle sensor 35 does not overlap the footrest 41 in vehicle bottom view. The angle sensor 35 does not overlap the stand bracket 74 in vehicle bottom view. The angle sensor 35 does not overlap the support shaft 75 in vehicle bottom view. The angle sensor 35 does not overlap the side stand 51 in vehicle bottom view. The angle sensor 35 may overlap the pedal bracket 76 or may not overlap the pedal bracket 76 in vehicle bottom view.

The angle sensor 35 may overlap the rotation shaft 32 or may not overlap the rotation shaft 32 in vehicle bottom view. The angle sensor 35 does not overlap the pedal arm 33 in vehicle bottom view. The angle sensor 35 does not overlap the pedal 34 in vehicle bottom view.

The crankcase cover 13 has an outer end 13c. The outer end 13c is a part of the crankcase cover 13 located outermost in the transverse direction Y. In other words, the outer end 13c is a part of the crankcase cover 13 farthest from the vehicle center plane C. For example, the outer end 13c is a left end of the crankcase cover 13.

The outer end 13c is located more outward than the crankcase 12 in the transverse direction Y. The outer end 13c is located more outward than the entirety of the crankcase 12 in the transverse direction Y. For example, the outer end 13c is located leftward of the crankcase 12. The outer end 13c is located more leftward than the entirety of the crankcase 12.

The pedal bracket 76 is disposed more inward than the outer end 13c in the transverse direction Y. The entirety of the pedal bracket 76 is disposed more inward than the outer end 13c in the transverse direction Y. In other words, the distance between the pedal bracket 76 and the vehicle center plane C is smaller than the distance between the outer end 13c and the vehicle center plane C. For example, the pedal bracket 76 is disposed rightward of the outer end 13c. The entirety of the pedal bracket 76 is disposed rightward of the outer end 13c.

The rotation shaft 32 is disposed more inward than the outer end 13c in the transverse direction Y. The entirety of the rotation shaft 32 is disposed more inward than the outer end 13c in the transverse direction Y. In other words, the distance between the rotation shaft 32 and the vehicle center plane C is smaller than the distance between the outer end 13c and the vehicle center plane C. For example, the rotation shaft 32 is disposed rightward of the outer end 13c. The entirety of the rotation shaft 32 is disposed rightward of the outer end 13c.

The pedal arm 33 is disposed more inward than the outer end 13c in the transverse direction Y. The entirety of the pedal arm 33 is disposed more inward than the outer end 13c in the transverse direction Y. In other words, the distance between the pedal arm 33 and the vehicle center plane C is smaller than the distance between the outer end 13c and the vehicle center plane C. For example, the pedal arm 33 is disposed rightward of the outer end 13c. The entirety of the pedal arm 33 is disposed rightward of the outer end 13c.

Part of the pedal 34 is disposed more outward than the outer end 13c in the transverse direction Y. That is, the part of the pedal 34 protrudes more outward than the outer end 13c in the transverse direction Y. For example, the part of the pedal 34 is disposed leftward of the outer end 13c. The part of the pedal 34 protrudes more leftward than the outer end 13c.

The pedal 34 has an outer end 34a. The outer end 34a is a part of the pedal 34 located outermost in the transverse direction Y. In other words, the outer end 34a is a part of the pedal 34 farthest from the vehicle center plane C. For example, the outer end 34a is a left end of the pedal 34.

The outer end 34a is located more outward than the outer end 13c in the transverse direction Y. In other words, the distance between the outer end 34a and the vehicle center plane C is larger than the distance between the outer end 13c and the vehicle center plane C. For example, the outer end 34a is located leftward of the outer end 13c.

The pedal 34 has an inner end 34b. The inner end 34b is a part of the pedal 34 located innermost in the transverse direction Y. In other words, the inner end 34b is a part of the pedal 34 closest to the vehicle center plane C. For example, the inner end 34b is a right end of the pedal 34.

The inner end 34b is located more inward than the outer end 13c in the transverse direction Y. In other words, the distance between the inner end 34b and the vehicle center plane C is smaller than the distance between the outer end 13c and the vehicle center plane C. For example, the inner end 34b is located rightward of the outer end 13c.

The angle sensor 35 is disposed more inward than the outer end 13c in the transverse direction Y. The entirety of the angle sensor 35 is disposed more inward than the outer end 13c in the transverse direction Y. In other words, the distance between the angle sensor 35 and the vehicle center plane C is smaller than the distance between the outer end 13c and the vehicle center plane C. For example, the angle sensor 35 is disposed rightward of the outer end 13c. The entirety of the angle sensor 35 is disposed rightward of the outer end 13c.

The sprocket cover 14 has an outer end 14c. The outer end 14c is a part of the sprocket cover 14 located outermost in the transverse direction Y. In other words, the outer end 14c is a part of the sprocket cover 14 farthest from the vehicle center plane C. For example, the outer end 14c is a left end of the sprocket cover 14.

The outer end 14c is located more outward than the crankcase 12 in the transverse direction Y. The outer end 14c is located more outward than the entirety of the crankcase 12 in the transverse direction Y. For example, the outer end 14c is located leftward of the crankcase 12. The outer end 14c is located more leftward than the entirety of the crankcase 12.

The outer end 14c is located more inward than the outer end 13c in the transverse direction Y. In other words, the distance between the outer end 14c and the vehicle center plane C is smaller than the distance between the outer end 13c and the vehicle center plane C. For example, the outer end 14c is located rightward of the outer end 13c.

Part of the pedal bracket 76 is disposed more outward than the outer end 14c in the transverse direction Y. The part of the pedal bracket 76 protrudes more outward than the outer end 14c in the transverse direction Y. For example, the part of the pedal bracket 76 is disposed leftward of the outer end 14c. The part of the pedal bracket 76 protrudes more leftward than the outer end 14c.

Part of the rotation shaft 32 is disposed more outward than the outer end 14c in the transverse direction Y. The part of the rotation shaft 32 protrudes more outward than the outer end 14c in the transverse direction Y. For example, the part of the rotation shaft 32 is disposed leftward of the outer end 14c. The part of the rotation shaft 32 protrudes more leftward than the outer end 14c.

The first end 32a of the rotation shaft 32 is located more outward than the outer end 14c in the transverse direction Y. In other words, the distance between the first end 32a and the vehicle center plane C is larger than the distance between the outer end 14c and the vehicle center plane C. For example, the first end 32a is located leftward of the outer end 14c.

The second end 32b of the rotation shaft 32 is located more inward than the outer end 14c in the transverse direction Y. In other words, the distance between the second end 32b and the vehicle center plane C is smaller than the distance between the outer end 14c and the vehicle center plane C. For example, the second end 32b is located rightward of the outer end 14c.

The pedal arm 33 is disposed more outward than the outer end 14c in the transverse direction Y. The entirety of the pedal arm 33 is disposed more outward than the outer end 14c in the transverse direction Y. In other words, the distance between the pedal arm 33 and the vehicle center plane C is larger than the distance between the outer end 14c and the vehicle center plane C. For example, the pedal arm 33 is disposed leftward of the outer end 14c. For example, the entirety of the pedal arm 33 is disposed leftward of the outer end 14c.

The pedal 34 is disposed more outward than the outer end 14c in the transverse direction Y. The entirety of the pedal 34 is disposed more outward than the outer end 14c in the transverse direction Y. In other words, the distance between the pedal 34 and the vehicle center plane C is larger than the distance between the outer end 14c and the vehicle center plane C. For example, the pedal 34 is disposed leftward of the outer end 14c. For example, the entirety of the pedal 34 is disposed leftward of the outer end 14c.

The inner end 34b of the pedal 34 is disposed more outward than the outer end 14c in the transverse direction Y. In other words, the distance between the inner end 34b and the vehicle center plane C is larger than the distance between the outer end 14c and the vehicle center plane C. For example, the inner end 34b is disposed leftward of the outer end 14c.

The angle sensor 35 is disposed more inward than the outer end 14c in the transverse direction Y. The entirety of the angle sensor 35 is disposed more inward than the outer end 14c in the transverse direction Y. In other words, the distance between the angle sensor 35 and the vehicle center plane C is smaller than the distance between the outer end 14c and the vehicle center plane C. For example, the angle sensor 35 is disposed rightward of the outer end 14c. The entirety of the angle sensor 35 is disposed rightward of the outer end 14c.

The disposing location of each element of the straddled vehicle 1 in vehicle rear view will be described.

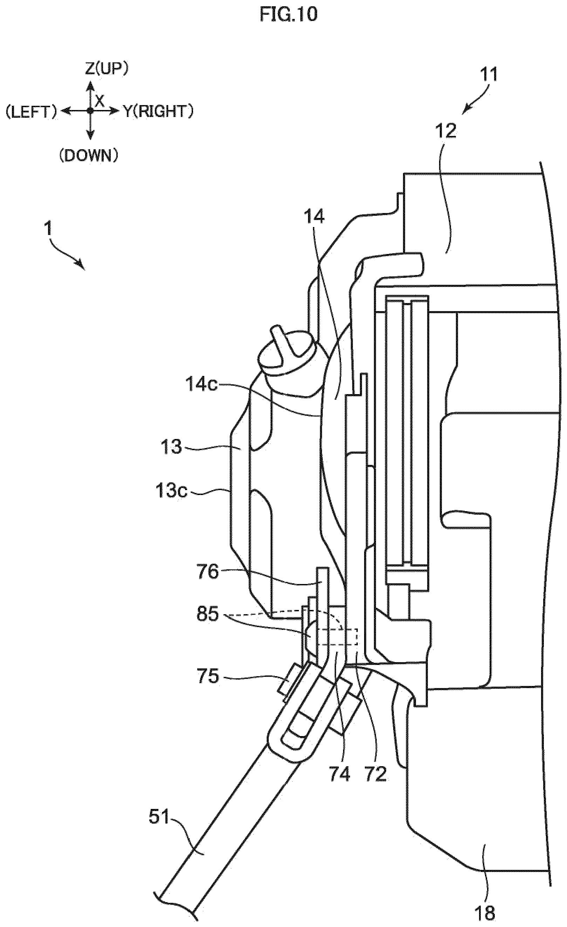

Fig. 10 is a rear view of part of the straddled vehicle 1. Fig. 10 illustrates joining of the adapter bracket 72, the stand bracket 74, and the pedal bracket 76. The adapter bracket 72, the stand bracket 74, and the pedal bracket 76 are arranged in the transverse direction Y. The stand bracket 74 is disposed more outward than the adapter bracket 72 in the transverse direction Y. For example, the stand bracket 74 is disposed leftward of the adapter bracket 72. The pedal bracket 76 is disposed more outward than the stand bracket 74 in the transverse direction Y. For example, the pedal bracket 76 is disposed leftward of the stand bracket 74.

The adapter bracket 72, the stand bracket 74, and the pedal bracket 76 are stacked on one another. The adapter bracket 72, the stand bracket 74, and the pedal bracket 76 are stacked in this order.

The adapter bracket 72 and the stand bracket 74 are in contact with each other. The adapter bracket 72 and the stand bracket 74 are in surface contact with each other. The stand bracket 74 and the pedal bracket 76 are in contact with each other. The stand bracket 74 and the pedal bracket 76 are in surface contact with each other.

In Fig. 10, part of the fastening member 85 is indicated by a broken line. The fastening member 85 extends in the transverse direction Y. The fastening member 85 penetrates the adapter bracket 72, the stand bracket 74, and the pedal bracket 76. The fastening member 85 collectively joins the adapter bracket 72, the stand bracket 74, and the pedal bracket 76.

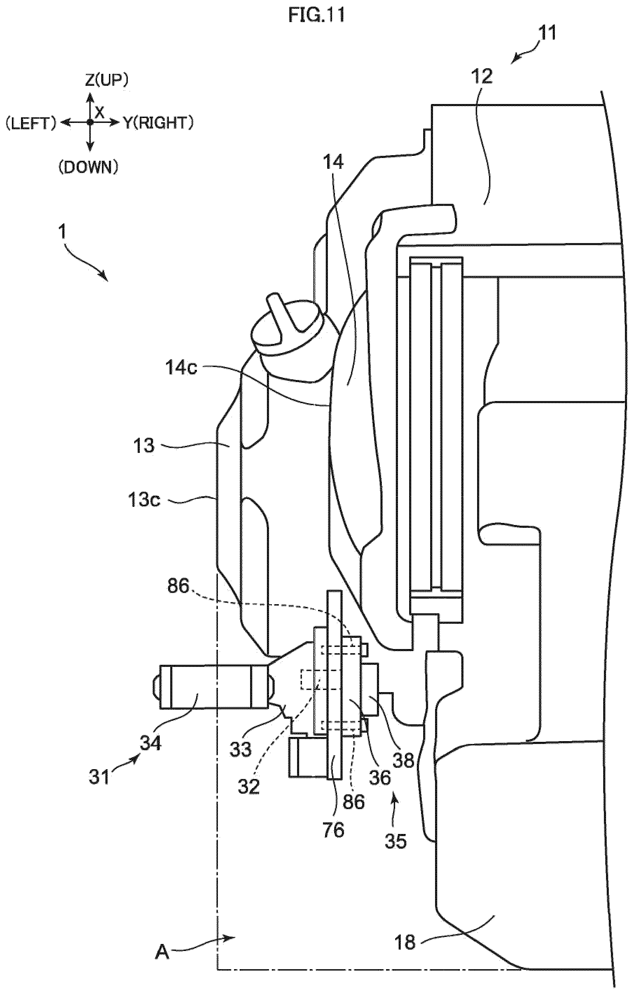

Fig. 11 is a rear view of part of the straddled vehicle 1. Fig. 11 illustrates each connection between the angle sensor 35, the pedal bracket 76, and the rotation shaft 32. In Fig. 11, the rotation shaft 32 is indicated by a broken line. The rotation shaft 32 penetrates the pedal bracket 76. The rotation shaft 32 is connected to the angle sensor 35. The rotation shaft 32 is connected to the detection shaft 37 (not illustrated).

The straddled vehicle 1 includes a fastening member 86. In Fig. 11, part of the fastening member 86 is indicated by a broken line. The fastening member 86 fastens the angle sensor 35 to the pedal bracket 76. The fastening member 86 fastens the case 36 to the pedal bracket 76. The angle sensor 35 is connected to the pedal bracket 76 by the fastening member 86. The case 36 is connected to the pedal bracket 76 by the fastening member 86.

In Fig. 11, an area A below the crankcase 12 is indicated by a one-dot chain line. Hereinafter, the area A below the crankcase 12 is appropriately referred to as a "first area A". The first area A is located below the crankcase cover 13. Although not illustrated, the first area A overlaps the crankcase cover 13 in vehicle bottom view. More specifically, the first area A is located more outward than the crankcase 12 in the transverse direction Y. For example, the first area A is located leftward of the crankcase 12. The first area A is located more outward than the oil pan 18 in the transverse direction Y. For example, the first area A is located leftward of the oil pan 18. The first area A is located more inward than the outer end 13c of the crankcase cover 13 in the transverse direction Y. For example, the first area A is located rightward of the outer end 13c of the crankcase cover 13. Although not illustrated, the first area A is located more rearward than the front end 13a of the crankcase cover 13 and more forward than the rear end 13b of the crankcase cover 13.

As described above, at least part of the pedal bracket 76 overlaps the crankcase cover 13 in vehicle bottom view. Consequently, at least part of the pedal bracket 76 is disposed in the first area A.

As described above, at least part of the rotation shaft 32 overlaps the crankcase cover 13 in vehicle bottom view. Consequently, at least part of the rotation shaft 32 is disposed in the first area A. For example, the entirety of the rotation shaft 32 is disposed in the first area A.

As described above, at least part of the pedal arm 33 overlaps the crankcase cover 13 in vehicle bottom view. Consequently, at least part of the pedal arm 33 is disposed in the first area A.

Part of the pedal 34 overlaps the first area A in vehicle rear view. The other part of the pedal 34 does not overlap the first area A in vehicle rear view.

As described above, the pedal 34 does not overlap the crankcase cover 13 in vehicle bottom view. The entirety of the pedal 34 is disposed more rearward than the rear end 13b of the crankcase cover 13. Therefore, strictly speaking, the pedal 34 is not disposed in the first area A. The entirety of the pedal 34 is disposed behind the first area A.

As described above, at least part of the angle sensor 35 overlaps the crankcase cover 13 in vehicle bottom view. Consequently, at least part of the angle sensor 35 is disposed in the first area A. For example, the entirety of the angle sensor 35 is disposed in the first area A.

### 6. Effects of Embodiment

The straddled vehicle 1 includes the vehicle body frame 61 and the engine 11. The engine 11 is supported by the vehicle body frame 61. The engine 11 includes the crankcase 12 and the crankcase cover 13. The crankcase cover 13 bulges in the transverse direction Y from the crankcase 12.

The straddled vehicle 1 includes the rotation shaft 32, the pedal arm 33, the pedal 34, and the angle sensor 35. The rotation shaft 32 is directly or indirectly supported by the vehicle body frame 61. The rotation shaft 32 extends in the transverse direction Y. The pedal arm 33 extends from the rotation shaft 32. The pedal arm 33 rotates about the rotation shaft 32. The pedal 34 is attached to the pedal arm 33. The angle sensor 35 detects a rotation angle of the pedal arm 33 around the rotation shaft 32.

The angle sensor 35 is disposed in front of the pedal 34. The pedal 34 is operated by the foot of the driver of the straddled vehicle 1. Thus, the angle sensor 35 is disposed in front of the driver's foot. In other words, the driver's foot is located behind the angle sensor 35. Consequently, the driver's foot does not reach the angle sensor 35. Interference between the angle sensor 35 and the driver's foot is thus suitably prevented. The angle sensor 35 is properly protected.

The angle sensor 35 is disposed below the crankcase cover 13. Consequently, the angle sensor 35 does not interfere with the crankcase cover 13. Interference between the angle sensor 35 and the engine 11 is thus suitably prevented.

At least part of the angle sensor 35 overlaps the crankcase cover 13 in vehicle bottom view. Consequently, the angle sensor 35 is installed in the first area A. The first area A is thus effectively used for installing the angle sensor 35.

In summary, in the straddled vehicle 1, the angle sensor 35 is properly protected. Furthermore, in the straddled vehicle 1, interference between the angle sensor 35 and the engine 11 is suitably prevented. Furthermore, in the straddled vehicle 1, the first area A is effectively used for installing the angle sensor 35.

The rotation shaft 32 overlaps the angle sensor 35 in vehicle side view. In other words, the rotation shaft 32 is disposed at substantially the same position as the angle sensor 35 in vehicle side view. Consequently, the rotation shaft 32 is disposed in front of the driver's foot. In other words, the driver's foot is located behind the rotation shaft 32. Consequently, the driver's foot does not reach the rotation shaft 32. Interference between the rotation shaft 32 and the driver's foot is thus suitably prevented. The rotation shaft 32 is properly protected.

The angle sensor 35 is disposed more inward than the rotation shaft 32 in the transverse direction Y. Consequently, the angle sensor 35 is more properly protected.

The rotation shaft 32 extends outward from the angle sensor 35 in the transverse direction Y. This makes it easy to dispose the angle sensor 35 more inward than the rotation shaft 32 in the transverse direction Y.

The angle sensor 35 is coupled to the rotation shaft 32. Thus, the rotation shaft 32 connects the pedal arm 33 to the angle sensor 35. Thus, the pedal arm 33 and the angle sensor 35 are connected to each other with a simple structure.

The rotation shaft 32 has a first end 32a and a second end 32b. The first end 32a is connected to the pedal arm 33. The second end 32b is connected to the angle sensor 35. This makes it easy for the rotation shaft 32 to connect the pedal arm 33 to the angle sensor 35.

The second end 32b is part of the rotation shaft 32 located innermost in the transverse direction Y. In other words, the second end 32b is the inner end of the rotation shaft 32. This makes it easy to dispose the angle sensor 35 more inward than the rotation shaft 32 in the transverse direction Y.

The rotation shaft 32 rotates integrally with the pedal arm 33. Consequently, the rotation angle of the rotation shaft 32 corresponds to the rotation angle of the pedal arm 33 around the rotation shaft 32. The angle sensor 35 detects a rotation angle of the rotation shaft 32. This makes it easy for the angle sensor 35 to detect the rotation angle of the pedal arm 33 around the rotation shaft 32.

The angle sensor 35 detects a rotation angle of the pedal arm 33 around the rotation shaft 32 with respect to the vehicle body frame 61. Thus, the angle sensor 35 properly detects the rotation angle of the pedal arm 33 around the rotation shaft 32.

The angle sensor 35 is directly or indirectly supported by the vehicle body frame 61. This makes it easy for the angle sensor 35 to detect the rotation angle of the pedal arm 33 around the rotation shaft 32 with respect to the vehicle body frame 61.

The rotation shaft 32 is disposed below the crankcase cover 13. Consequently, the rotation shaft 32 does not interfere with the crankcase cover 13. Interference between the rotation shaft 32 and the engine 11 is thus suitably prevented.

At least part of the rotation shaft 32 overlaps the crankcase cover 13 in vehicle bottom view. Consequently, the rotation shaft 32 is installed in first area A. Thus, the first area A is effectively used for installing the rotation shaft 32.

The rotation shaft 32 is disposed in front of the pedal 34. Therefore, the driver's foot is located behind the rotation shaft 32. Consequently, the driver's foot does not reach the rotation shaft 32. Interference between the rotation shaft 32 and the driver's foot is thus suitably prevented. The rotation shaft 32 is properly protected.

The pedal arm 33 extends rearward from the rotation shaft 32. This makes it easy to dispose the rotation shaft 32 in front of the pedal 34.

The crankcase cover 13 has the outer end 13c. The outer end 13c is a part of the crankcase cover 13 located outermost in the transverse direction Y. The angle sensor 35 is disposed more inward than the outer end 13c in the transverse direction Y. Consequently, the angle sensor 35 does not have part located more outward than the outer end 13c in the transverse direction Y. For example, the angle sensor 35 does not have part located leftward of the outer end 13c. In other words, the angle sensor 35 does not protrude more outward than the outer end 13c in the transverse direction Y. For example, the angle sensor 35 does not protrude leftward of the outer end 13c. Thus, the angle sensor 35 is more suitably protected.

The rotation shaft 32 is disposed more inward than the outer end 13c of the crankcase cover 13 in the transverse direction Y. Thus, the rotation shaft 32 does not have part located more outward than the outer end 13c in the transverse direction Y. For example, the rotation shaft 32 does not have part located leftward of the outer end 13c. In other words, the rotation shaft 32 does not protrude more outward than the outer end 13c in the transverse direction Y. For example, the rotation shaft 32 does not protrude leftward of the outer end 13c. Thus, the rotation shaft 32 is more properly protected.

The straddled vehicle 1 includes a pedal bracket 76. The pedal bracket 76 is directly or indirectly supported by the vehicle body frame 61. The pedal bracket 76 supports the rotation shaft 32. Consequently, the rotation shaft 32 is suitably supported by the vehicle body frame 61.

The rotation shaft 32 penetrates the pedal bracket 76 in the transverse direction Y. This makes it easy for the pedal bracket 76 to support the rotation shaft 32.

The pedal arm 33 is disposed more outward than the pedal bracket 76 in the transverse direction Y. This makes it easy to dispose the pedal 34 more outward than the pedal bracket 76 in the transverse direction Y. Consequently, it is easy for the driver to operate the pedal 34 with the driver's foot.

The angle sensor 35 is disposed more inward than the pedal bracket 76 in the transverse direction Y. This makes it easy for the pedal bracket 76 to protect the angle sensor 35. The angle sensor 35 is thus more properly protected.

The angle sensor 35 overlaps the pedal bracket 76 in vehicle side view. This makes it even easier for the pedal bracket 76 to protect the angle sensor 35. The angle sensor 35 is thus more properly protected.

The angle sensor 35 detects a rotation angle of the pedal arm 33 around the rotation shaft 32 with respect to the pedal bracket 76. Thus, the angle sensor 35 properly detects the rotation angle of the pedal arm 33 around the rotation shaft 32.

The angle sensor 35 is directly or indirectly supported by the pedal bracket 76. This makes it easy for the angle sensor 35 to detect the rotation angle of the pedal arm 33 about the rotation shaft 32 with respect to the pedal bracket 76.

The pedal bracket 76 overlaps the pedal 34 in vehicle side view. Consequently, the pedal bracket 76 separates the angle sensor 35 from the pedal 34. The pedal bracket 76 thus guards the angle sensor 35 from the foot of the driver operating the pedal 34. Therefore, the angle sensor 35 is more properly protected.

The straddled vehicle 1 includes a side stand 51. The side stand 51 is directly or indirectly supported by the vehicle body frame 61. The side stand 51 is operated by the driver's foot. The angle sensor 35 is disposed in front of the side stand 51. Consequently, even when the side stand 51 is operated by the driver's foot, the driver's foot is located behind the angle sensor 35. Even when the side stand 51 is operated by the driver's foot, the driver's foot does not reach the angle sensor 35. Interference between the angle sensor 35 and the driver's foot is thus more suitably prevented. The angle sensor 35 is more properly protected.

The straddled vehicle 1 includes a stand bracket 74. The stand bracket 74 is directly or indirectly supported by the vehicle body frame 61. The stand bracket 74 supports the side stand 51. Consequently, the side stand 51 is suitably supported by the vehicle body frame 61.

The angle sensor 35 is disposed in front of the stand bracket 74. This makes it easy to dispose the angle sensor 35 in front of the side stand 51.

The angle sensor 35 is not supported by the stand bracket 74. This makes it even easier to dispose the angle sensor 35 in front of the stand bracket 74.

The straddled vehicle 1 includes an adapter bracket 72. The adapter bracket 72 is directly or indirectly supported by the vehicle body frame 61. The adapter bracket 72 supports the pedal bracket 76 and the stand bracket 74. Consequently, the pedal bracket 76 and the stand bracket 74 are suitably supported by the vehicle body frame 61.

The straddled vehicle 1 includes a fastening member 85. The fastening member 85 fastens the pedal bracket 76 and the stand bracket 74 together to the adapter bracket 72. Thus, the adapter bracket 72 supports the pedal bracket 76 and the stand bracket 74 with a simple structure. This makes it easy for the adapter bracket 72 to support the pedal bracket 76 and the stand bracket 74.

The engine 11 includes a sprocket cover 14. The sprocket cover 14 is disposed behind the crankcase cover 13. The angle sensor 35 is disposed below the sprocket cover 14. Consequently, the angle sensor 35 does not interfere with the sprocket cover 14. Interference between the angle sensor 35 and the engine 11 is thus more suitably prevented.

The sprocket cover 14 has the outer end 14c. The outer end 14c is a part of the sprocket cover 14 located outermost in the transverse direction Y. The angle sensor 35 is disposed more inward than the outer end 14c in the transverse direction Y. Consequently, the angle sensor 35 does not have part located more outward than the outer end 14c in the transverse direction Y. For example, the angle sensor 35 does not have part located more leftward than the outer end 14c. In other words, the angle sensor 35 does not protrude more outward than the outer end 14c in the transverse direction Y. For example, the angle sensor 35 does not protrude leftward of the outer end 14c. Thus, the angle sensor 35 is more suitably protected.

The straddled vehicle 1 includes an electric wire 91. The electric wire 91 is connected to the angle sensor 35. The electric wire 91 is disposed in front of the pedal 34. Consequently, the electric wire 91 is disposed in front of the driver's foot. In other words, the driver's foot is located behind the electric wire 91. Thus, the driver's foot does not reach the electric wire 91. Interference between the electric wire 91 and the driver's foot is thus suitably prevented. The electric wire 91 is properly protected.

The embodiment described above may be modified as follows.
(1) In the foregoing embodiment, the rotation shaft 32 is indirectly supported by the vehicle body frame 61. Alternatively, the rotation shaft 32 may be directly supported by the vehicle body frame 61. For example, the rotation shaft 32 may be directly supported by the pivot frame 67. In the present modification, the pedal bracket 76 may be omitted.
(2) In the foregoing embodiment, the rotation shaft 32 overlaps the angle sensor 35 in vehicle side view. In other words, the rotation shaft 32 is disposed at substantially the same position as the angle sensor 35 in vehicle side view. Alternatively, the rotation shaft 32 may not overlap the angle sensor 35 in vehicle side view. The rotation shaft 32 may not be disposed at substantially the same position as the angle sensor 35 in vehicle side view. For example, the rotation shaft 32 may be disposed in front of the angle sensor 35. Alternatively, the rotation shaft 32 may be disposed behind angle sensor 35.
(3) In the foregoing embodiment, the rotation shaft 32 is connected to the angle sensor 35. The rotation shaft 32 connects the pedal arm 33 to the angle sensor 35. Alternatively, the rotation shaft 32 may not be connected to the angle sensor 35. The rotation shaft 32 may not connect the pedal arm 33 to the angle sensor 35. It is preferred in the present modification that the straddled vehicle 1 includes a connecting mechanism for connecting the pedal arm 33 to the angle sensor 35. The connecting mechanism includes, for example, at least one of a linkage, a rod, and a wire. The connecting mechanism is, for example, for transmitting the rotation of the pedal arm 33 about the rotation shaft 32 to the angle sensor 35.
(4) In the foregoing embodiment, the rotation shaft 32 is rotatable with respect to the pedal bracket 76. The rotation shaft 32 is rotatable with respect to the vehicle body frame 61. Alternatively, the rotation shaft 32 may not be rotatable with respect to the pedal bracket 76. The rotation shaft 32 may be fixed to the pedal bracket 76. The rotation shaft 32 may not be rotatable with respect to the vehicle body frame 61. The rotation shaft 32 may be fixed to the vehicle body frame 61.
(5) In the foregoing embodiment, the pedal arm 33 is fixed to the rotation shaft 32. The pedal arm 33 rotates integrally with the rotation shaft 32. The pedal arm 33 is not rotatable with respect to the rotation shaft 32. Alternatively, the pedal arm 33 may not be fixed to the rotation shaft 32. The pedal arm 33 may not rotate integrally with the rotation shaft 32. The pedal arm 33 may be rotatable with respect to the rotation shaft 32.
(6) In the foregoing embodiment, at least part of the rotation shaft 32 overlaps the crankcase cover 13 in vehicle bottom view. Alternatively, the rotation shaft 32 may not overlap the crankcase cover 13 in vehicle bottom view.
(7) In the foregoing embodiment, the rotation shaft 32 is disposed in front of the pedal 34. Alternatively, the rotation shaft 32 may be disposed behind the pedal 34. It is preferred in the present modification that the pedal arm 33 extends forward from the rotation shaft 32.
(8) In the foregoing embodiment, the pedal arm 33 extends rearward from the rotation shaft 32. Alternatively, the pedal arm 33 may extend forward from the rotation shaft 32. It is preferred in the present modification that the rotation shaft 32 is disposed behind the pedal 34.
(9) In the foregoing embodiment, the angle sensor 35 is indirectly supported by the vehicle body frame 61. Alternatively, the angle sensor 35 may be directly supported by the vehicle body frame 61. For example, the angle sensor 35 may be directly supported by the pivot frame 67.
(10) In the foregoing embodiment, the angle sensor 35 is directly supported by the pedal bracket 76. Alternatively, the angle sensor 35 may be indirectly supported by the pedal bracket 76.
(11) In the foregoing embodiment, the angle sensor 35 is the rotary potentiometer. Alternatively, the angle sensor 35 may be a Hall IC.
(12) In the foregoing embodiment, the pedal bracket 76 is indirectly supported by the vehicle body frame 61. Alternatively, the pedal bracket 76 may be directly supported by the vehicle body frame 61. For example, the pedal bracket 76 may be directly supported by the pivot frame 67.
(13) In the foregoing embodiment, the side stand 51 is indirectly supported by the vehicle body frame 61. Alternatively, the side stand 51 may be directly supported by the vehicle body frame 61. For example, the side stand 51 may be directly supported by the pivot frame 67. In the present modification, the stand bracket 74 may be omitted.
(14) In the foregoing embodiment, the stand bracket 74 is indirectly supported by the vehicle body frame 61. Alternatively, the stand bracket 74 may be directly supported by the vehicle body frame 61. For example, the stand bracket 74 may be directly supported by the pivot frame 67.
(15) In the foregoing embodiment, the adapter bracket 72 is directly supported by the vehicle body frame 61. Alternatively, the adapter bracket 72 may be indirectly supported by the vehicle body frame 61.
(16) In the foregoing embodiment, the engine 11 includes the sprocket cover 14. Alternatively, the sprocket cover 14 may be omitted.
(17) In the foregoing embodiment, the straddled vehicle 1 includes the chain 23. The chain 23 transmits the rotational power of the engine 11 to the rear wheels 22. Alternatively, the chain 23 may be omitted. The straddled vehicle 1 may include a drive shaft (not illustrated). The drive shaft transmits the rotational power of the engine 11 to the rear wheel 22.
(18) In the foregoing embodiment, the pedal arm 33 and the shift mechanism are not mechanically connected. Alternatively, the pedal arm 33 and the shift mechanism may be mechanically connected. For example, the pedal arm 33 and the shift mechanism may be connected via at least one of a linkage, a rod, and a wire. In the present modification, the shift mechanism is driven by the rotation of the pedal arm 33 with respect to the rotation shaft 32. The shift mechanism is driven by the force applied to the pedal 34 by the driver.
(19) In the foregoing embodiment, the electric component 95 controls the shift mechanism according to the detection result of the angle sensor 35. Alternatively, the electric component 95 may control at least one of the shift mechanism, the engine 11, and the clutch according to the detection result of the angle sensor 35. More specifically, the electric component 95 may control at least one of the change of the gear by the shift mechanism, the rotational power of the engine 11, and the switching of the clutch between the engaged state and the disengaged state according to the detection result of the angle sensor 35. The rotational power of the engine 11 is, for example, rotational power output from the crankshaft. For example, when the shift mechanism changes gears, the electric component 95 may temporarily reduce the rotational power of the engine 11. For example, the electric component 95 may switch the clutch from the engaged state to the disengaged state before the shift mechanism changes the gear. For example, after the shift mechanism changes the gear, the electric component 95 may switch the clutch from the disengaged state to the engaged state.
(20) In the foregoing embodiment, the straddled vehicle 1 is classified as a street vehicle. Alternatively, the straddled vehicle 1 may be changed to another type of vehicle such as a sports-type vehicle or an ALL-TERRAIN VEHICLE.
(21) In the foregoing embodiment, the number of front wheels 4 included in the straddled vehicle 1 is one. Alternatively, the number of front wheels 4 included in the straddled vehicle 1 may be two. In the foregoing embodiment, the number of rear wheels 22 included in the straddled vehicle 1 is one. Alternatively, the number of rear wheels 22 included in the straddled vehicle 1 may be two.
(22) In the foregoing embodiment, the straddled vehicle 1 includes the engine 11 (internal combustion engine) as a power source. Alternatively, the straddled vehicle 1 may include an electric motor as a power source in addition to the engine 11. For example, the straddled vehicle 1 may include an electric motor as a power source instead of the engine 11.

### [Description of Reference Numerals]

1: Straddled vehicle
4: Front wheel
22: Rear wheel
11: Engine
12: Crankcase
13: Crankcase cover
13a: Front end of crankcase cover
13b: Rear end of crankcase cover
13c: Outer end of crankcase cover
14: Sprocket cover
14a: Front end of sprocket cover
14b: Rear end of sprocket cover
14c: Outer end of sprocket cover
31: Pedal unit
32: Rotation shaft
32a: First end of rotation shaft
32b: Second end of rotation shaft
33: Pedal arm
34: Pedal
34a: Outer end of pedal
34b: Inner end of pedal
35: Angle sensor
36: Case
37: Detection shaft
38: Connector
41: Footrest
51: Side stand
61: Vehicle body frame
67: Pivot frame
71: Engine bracket
72: Adapter bracket
73: Footrest bracket
74: Stand bracket
75: Support shaft
76: Pedal bracket
76a: Front end of pedal bracket
76b: Rear end of pedal bracket
85: Fastening member
86: Fastening member
91: Electric wire
91a: First end of electric wire
95: Electric component
A: Area below crankcase cover (first area)
C: Vehicle center plane
X: Longitudinal direction (forward-rearward) of straddled vehicle
Y: Transverse direction of straddled vehicle
Z: Up-down direction of straddled vehicle

## Claims

1. A straddled vehicle (1) comprising:
a vehicle body frame (61);
an engine (11) supported by the vehicle body frame (61);
a rotation shaft (32) that is directly or indirectly supported by the vehicle body frame (61) and extends in a transverse direction (Y) of the straddled vehicle (1);
a pedal arm (33) extending from the rotation shaft (32) and configured to rotate around the rotation shaft (32);
a footrest (41);
a pedal (34) attached to the pedal arm (33), wherein at least part of the pedal (34) is disposed at a same height position as the footrest (41), the pedal (34) is disposed in front of the footrest (41) with regard to a forward-rearward direction (X) of the straddled vehicle (1), the entirety of the pedal (34) is disposed more forward than the entirety of the footrest (41), the pedal (34) does not overlap the footrest (41) in vehicle side view; and
an angle sensor (35) configured to detect a rotation angle of the pedal arm (33) around the rotation shaft (32); wherein
the engine (11) includes
a crankcase (12), and
a crankcase cover (13) bulging from the crankcase (12) in the transverse direction (Y) of the straddled vehicle (1),
the angle sensor (35) is disposed in front of the pedal (34) with regard to the forward-rearward direction (X) of the straddled vehicle (1),
the angle sensor (35) is disposed below the crankcase cover (13) with regard to an up-down direction (Z) of the straddled vehicle (1), and
at least part of the angle sensor (35) overlaps the crankcase cover (13) in bottom view of the straddled vehicle (1).

2. The straddled vehicle (1) according to claim 1, wherein the rotation shaft (32) overlaps the angle sensor (35) in side view of the straddled vehicle (1).

3. The straddled vehicle (1) according to claim 1 or 2, wherein the angle sensor (35) is disposed more inward than the rotation shaft (32) in the transverse direction (Y) of the straddled vehicle (1).

4. The straddled vehicle (1) according to any one of claims 1 to 3, wherein the rotation shaft (32) is disposed below the crankcase cover (13) with regard to the up-down direction (Z) of the straddled vehicle (1), and
at least part of the rotation shaft (32) overlaps the crankcase cover (13) in bottom view of the straddled vehicle (1).

5. The straddled vehicle (1) according to any one of claims 1 to 4, wherein the rotation shaft (32) is disposed in front of the pedal (34) with regard to the forward-rearward direction (X) of the straddled vehicle (1).

6. The straddled vehicle (1) according to any one of claims 1 to 5, wherein the crankcase cover (13) includes an outer end (13c) located outermost in the transverse direction (Y) of the straddled vehicle (1), and
the angle sensor (35) is disposed more inward than the outer end (13c) of the crankcase cover (13) in the transverse direction (Y) of the straddled vehicle (1).

7. The straddled vehicle (1) according to claim 6, wherein the rotation shaft (32) is disposed more inward than the outer end (13c) of the crankcase cover (13) in the transverse direction (Y) of the straddled vehicle (1).

8. The straddled vehicle (1) according to any one of claims 1 to 7, further comprising:
a pedal bracket (76) that is directly or indirectly supported by the vehicle body frame (61) and supports the rotation shaft (32), wherein
the rotation shaft (32) penetrates the pedal bracket (76) in the transverse direction (Y) of the straddled vehicle (1),
the pedal arm (33) is disposed more outward than the pedal bracket (76) in the transverse direction (Y) of the straddled vehicle (1), and
the angle sensor (35) is disposed more inward than the pedal bracket (76) in the transverse direction (Y) of the straddled vehicle (1).

9. The straddled vehicle (1) according to claim 8, wherein the angle sensor (35) overlaps the pedal bracket (76) in side view of the straddled vehicle (1).

10. The straddled vehicle (1) according or claim 8 or 9, the straddled vehicle (1) comprising a side stand (51) that is directly or indirectly supported by the vehicle body frame (61), wherein
the angle sensor (35) is disposed in front of the side stand (51) with regard to the forward-rearward direction (X) of the straddled vehicle (1).

11. The straddled vehicle (1) according to claim 10, further comprising:
a stand bracket (74) that is directly or indirectly supported by the vehicle body frame (61) and supports the side stand (51), wherein
the angle sensor (35) is disposed in front of the stand bracket (74) with regard to the forward-rearward direction (X) of the straddled vehicle (1).

12. The straddled vehicle (1) according to claim 11, further comprising:
an adapter bracket (72) that is directly or indirectly supported by the vehicle body frame (61) and supports the pedal bracket (76) and the stand bracket (74); and
a fastening member (85) that fastens the pedal bracket (76) and the stand bracket (74) together to the adapter bracket (72).

13. The straddled vehicle (1) according to any one of claims 1 to 12, wherein the engine (11) includes a sprocket cover (14) disposed behind the crankcase cover (13) with regard to the forward-rearward direction (X) of the straddled vehicle (1), and
the angle sensor (35) is disposed below the sprocket cover (14) with regard to the up-down direction (Z) of the straddled vehicle (1).

14. The straddled vehicle (1) according to claim 13, wherein the sprocket cover (14) has an outer end (14c) located outermost in the transverse direction (Y) of the straddled vehicle (1), and
the angle sensor (35) is disposed more inward than the outer end (14c) of the sprocket cover (14) in the transverse direction (Y) of the straddled vehicle (1).

15. The straddled vehicle (1) according to any one of claims 1 to 14, further comprising an electric wire (91) that is connected to the angle sensor (35), wherein
the electric wire (91) is disposed in front of the pedal (34) with regard to the forward-rearward direction (X) of the straddled vehicle (1).

## Patentansprüche

1. Ein Spreizsitzfahrzeug (1), das umfasst:
einen Fahrzeugkörperrahmen (61);
einen Motor (11), der vom Fahrzeugkörperrahmen (61) gelagert wird;
eine Drehwelle (32), die direkt oder indirekt vom Fahrzeugkörperrahmen (61) gelagert wird und sich in einer Querrichtung (Y) des Spreizsitzfahrzeugs (1) erstreckt;
einen Pedalarm (33), der sich von der Drehwelle (32) erstreckt und so ausgebildet ist, dass er sich um die Drehwelle (32) dreht;
eine Fußstütze (41);
ein Pedal (34), das an dem Pedalarm (33) befestigt ist, wobei zumindest ein Teil des Pedals (34) auf derselben Höhe wie die Fußstütze (41) angeordnet ist, das Pedal (34) in Bezug auf eine Vorwärts-Rückwärts-Richtung (X) des Spreizsitzfahrzeugs (1) vor der Fußstütze (41) angeordnet ist, das gesamte Pedal (34) weiter vorne angeordnet ist als die gesamte Fußstütze (41), das Pedal (34) die Fußstütze (41) in der Fahrzeugseitenansicht nicht überlappt; und
einen Winkelsensor (35), der konfiguriert ist, um einen Drehwinkel des Pedalarms (33) um die Drehachse (32) zu erfassen; wobei
der Motor (11) enthält
ein Kurbelgehäuse (12) und
einen Kurbelgehäusedeckel (13), der in Querrichtung (Y) des Spreizsitzfahrzeugs (1) aus dem Kurbelgehäuse (12) hervorsteht,
der Winkelsensor (35) in Bezug auf die Vorwärts-Rückwärts-Richtung (X) des Spreizsitzfahrzeugs (1) vor dem Pedal (34) angeordnet ist,
der Winkelsensor (35) in Bezug auf eine Auf-Ab-Richtung (Z) des Spreizsitzfahrzeugs (1) unterhalb des Kurbelgehäusedeckels (13) angeordnet ist, und
zumindest ein Teil des Winkelsensors (35) in der Draufsicht auf das Spreizsitzfahrzeug (1) den Kurbelgehäusedeckel (13) überlappt.

2. Das Spreizsitzfahrzeug (1) gemäß Anspruch 1, wobei die Drehwelle (32) in der Seitenansicht des Spreizsitzfahrzeugs (1) den Winkelsensor (35) überlappt.

3. Das Spreizsitzfahrzeug (1) gemäß Anspruch 1 oder 2, wobei der Winkelsensor (35) in Querrichtung (Y) des Spreizsitzfahrzeugs (1) weiter innen angeordnet ist als die Drehwelle (32).

4. Das Spreizsitzfahrzeug (1) gemäß irgendeinem der Ansprüche 1 bis 4, wobei die Drehwelle (32) in Bezug auf die Auf-Ab-Richtung (Z) des Spreizsitzfahrzeugs (1) unterhalb des Kurbelgehäusedeckels (13) angeordnet ist und
wobei zumindest ein Teil der Drehwelle (32) in der Unterseitenansicht des Spreizsitzfahrzeugs (1) den Kurbelgehäusedeckel (13) überlappt.

5. Das Spreizsitzfahrzeug (1) gemäß irgendeinem der Ansprüche 1 bis 4, wobei die Drehwelle (32) in Bezug auf die Vorwärts-Rückwärts-Richtung (X) des Spreizsitzfahrzeugs (1) vor dem Pedal (34) angeordnet ist.

6. Das Spreizsitzfahrzeug (1) gemäß irgendeinem der Ansprüche 1 bis 5, wobei der Kurbelgehäusedeckel (13) ein äußeres Ende (13c) enthält, das in Querrichtung (Y) des Spreizsitzfahrzeugs (1) am äußersten Ende liegt, und
der Winkelsensor (35) in der Querrichtung (Y) des Spreizsitzfahrzeugs (1) weiter innen angeordnet ist als das äußere Ende (13c) des Kurbelgehäusedeckels (13).

7. Das Spreizsitzfahrzeug (1) gemäß Anspruch 6, wobei die Drehwelle (32) in Querrichtung (Y) des Spreizsitzfahrzeugs (1) weiter innen angeordnet ist als das äußere Ende (13c) des Kurbelgehäusedeckels (13).

8. Das Spreizsitzfahrzeug (1) gemäß irgendeinem der Ansprüche 1 bis 7, ferner umfassend:
eine Pedalhalterung (76), die direkt oder indirekt vom Fahrzeugkörperrahmen (61) gelagert wird und die Drehwelle (32) lagert, wobei
die Drehwelle (32) die Pedalhalterung (76) in Querrichtung (Y) des Spreizsitzfahrzeugs (1) durchdringt,
der Pedalarm (33) in Querrichtung (Y) des Spreizsitzfahrzeugs (1) weiter außen angeordnet ist als die Pedalhalterung (76), und
der Winkelsensor (35) in Querrichtung (Y) des Spreizsitzfahrzeugs (1) weiter innen angeordnet ist als die Pedalhalterung (76).

9. Das Spreizsitzfahrzeug (1) gemäß Anspruch 8, wobei der Winkelsensor (35) in der Seitenansicht des Spreizsitzfahrzeugs (1) die Pedalhalterung (76) überlappt.

10. Das Spreizsitzfahrzeug (1) gemäß Anspruch 8 oder 9, wobei das Spreizsitzfahrzeug (1) einen Seitenständer (51) umfasst, der direkt oder indirekt vom Fahrzeugkörperrahmen (61) gelagert wird, wobei
der Winkelsensor (35)
der Winkelsensor (35) in Bezug auf die Vorwärts-Rückwärts-Richtung (X) des Spreizsitzfahrzeugs (1) vor dem Seitenständer (51) angeordnet ist.

11. Das Spreizsitzfahrzeug (1) gemäß Anspruch 10, das ferner umfasst:
eine Ständerhalterung (74), die direkt oder indirekt vom Fahrzeugkörperrahmen (61) gelagert wird und den Seitenständer (51) lagert, wobei
der Winkelsensor (35) in Bezug auf die Vorwärts-Rückwärts-Richtung (X) des Spreizsitzfahrzeugs (1) vor der Ständerhalterung (74) angeordnet ist.

12. Das Spreizsitzfahrzeug (1) gemäß Anspruch 11, ferner umfassend:
eine Adapterhalterung (72), die direkt oder indirekt vom Fahrzeugkörperrahmen (61) gelagert wird und die Pedalhalterung (76) sowie die Ständerhalterung (74) lagert; und
ein Befestigungselement (85), das die Pedalhalterung (76) und die Ständerhalterung (74) gemeinsam an der Adapterhalterung (72) befestigt.

13. Das Spreizsitzfahrzeug (1) gemäß irgendeinem der Ansprüche 1 bis 12, wobei der Motor (11) eine Kettenradabdeckung (14) enthält, die in Bezug auf die Vorwärts-Rückwärts-Richtung (X) des Spreizsitzfahrzeugs (1) hinter dem Kurbelgehäusedeckel (13) angeordnet ist, und
der Winkelsensor (35) in Bezug auf die Auf-Ab-Richtung (Z) des Spreizsitzfahrzeugs (1) unterhalb der Kettenradabdeckung (14) angeordnet ist.

14. Das Spreizsitzfahrzeug (1) gemäß Anspruch 13, wobei die Kettenradabdeckung (14) ein äußeres Ende (14c) hat, das in Querrichtung (Y) des Spreizsitzfahrzeugs (1) am äußersten Ende liegt, und
der Winkelsensor (35) in der Querrichtung (Y) des Spreizsitzfahrzeugs (1) weiter innen als das äußere Ende (14c) der Kettenradabdeckung (14) angeordnet ist.

15. Das Spreizsitzfahrzeug (1) gemäß irgendeinem der Ansprüche 1 bis 14, das ferner ein elektrisches Kabel (91) umfasst, das mit dem Winkelsensor (35) verbunden ist, wobei
das elektrische Kabel (91) in Bezug auf die Längsrichtung (X) des Spreizsitzfahrzeugs (1) vor dem Pedal (34) angeordnet ist.

## Revendications

1. Véhicule à enfourcher (1) comprenant :
un cadre de véhicule (61) ;
un moteur (11) supporté par le cadre de véhicule (61) ;
un arbre de rotation (32) qui est supporté directement ou indirectement par le cadre de véhicule (61) et s'étend en direction transversale (Y) du véhicule à enfourcher (1) ;
un bras de pédale (33) qui s'étend depuis l'arbre de rotation (32) et est configuré pour tourner autour de l'arbre de rotation (32) ;
un repose-pied (41) ;
une pédale (34) attachée au bras de pédale (33), dans lequel au moins une partie de la pédale (34) est disposée à la même position en hauteur que le repose-pied (41), la pédale (34) est disposée devant le repose-pied (41) en direction avant-arrière (X) du véhicule à enfourcher (1), l'entièreté de la pédale (34) est disposée plus en avant que l'entièreté du repose-pied (41), la pédale (34) ne chevauche pas le repose-pied (41) en vue latérale du véhicule ; et
un capteur d'angle (35) configuré pour détecter un angle de rotation du bras de pédale (33) autour de l'arbre de rotation (32) ; dans lequel
le moteur (11) inclut
un carter (12), et
un couvercle de carter (13) saillant par rapport au carter (12) en direction transversale (Y) du véhicule à enfourcher (1),
le capteur d'angle (35) est disposé devant la pédale (34) en direction avant-arrière (X) du véhicule à enfourcher (1),
le capteur d'angle (35) est disposé sous le couvercle de carter (13) en direction haut-bas (Z) du véhicule à enfourcher (1), et
au moins une partie du capteur d'angle (35) chevauche le couvercle de carter (13) en vue de dessous du véhicule à enfourcher (1).

2. Véhicule à enfourcher (1) selon la revendication 1, dans lequel l'arbre de rotation (32) chevauche le capteur d'angle (35) en vue latérale du véhicule à enfourcher (1).

3. Véhicule à enfourcher (1) selon la revendication 1 ou 2, dans lequel le capteur d'angle (35) est disposé plus à l'intérieur que l'arbre de rotation (32) en direction transversale (Y) du véhicule à enfourcher (1).

4. Véhicule à enfourcher (1) selon l'une quelconque des revendications 1 à 3, dans lequel
l'arbre de rotation (32) est disposé sous le couvercle de carter (13) en direction haut-bas (Z) du véhicule à enfourcher (1), et
au moins une partie de l'arbre de rotation (32) chevauche le couvercle de carter (13) en vue de dessous du véhicule à enfourcher (1).

5. Véhicule à enfourcher (1) selon l'une quelconque des revendications 1 à 4, dans lequel l'arbre de rotation (32) est disposé devant la pédale (34) en direction avant-arrière (X) du véhicule à enfourcher (1).

6. Véhicule à enfourcher (1) selon l'une quelconque des revendications 1 à 5, dans lequel
une extrémité externe (13c) du couvercle de carter (13) est située le plus à l'extérieur en direction transversale (Y) du véhicule à enfourcher (1), et
le capteur d'angle (35) est disposé plus à l'intérieur que l'extrémité externe (13c) du couvercle de carter (13) en direction transversale (Y) du véhicule à enfourcher (1).

7. Véhicule à enfourcher (1) selon la revendication 6, dans lequel l'arbre de rotation (32) est disposé plus à l'intérieur que l'extrémité externe (13c) du couvercle de carter (13) en direction transversale (Y) du véhicule à enfourcher (1).

8. Véhicule à enfourcher (1) selon l'une quelconque des revendications 1 à 7, comprenant en outre :
un support de pédale (76) qui est supporté directement ou indirectement par le cadre de véhicule (61) et qui supporte l'arbre de rotation (32), dans lequel
l'arbre de rotation (32) pénètre le support de pédale (76) en direction transversale (Y) du véhicule à enfourcher (1),
le bras de pédale (33) est disposé plus à l'extérieur que le support de pédale (76) en direction transversale (Y) du véhicule à enfourcher (1), et
le capteur d'angle (35) est disposé plus à l'intérieur que le support de pédale (76) en direction transversale (Y) du véhicule à enfourcher (1).

9. Véhicule à enfourcher (1) selon la revendication 8, dans lequel le capteur d'angle (35) chevauche le support de pédale (76) en vue latérale du véhicule à enfourcher (1).

10. Véhicule à enfourcher (1) selon la revendication 8 ou 9, le véhicule à enfourcher (1) comprenant une béquille latérale (51) qui est supportée directement ou indirectement par le cadre de véhicule (61), dans lequel
le capteur d'angle (35) est disposé devant la béquille latérale (51) en direction avant-arrière (X) du véhicule à enfourcher (1).

11. Véhicule à enfourcher (1) selon la revendication 10, comprenant en outre :
un support de béquille (74) qui est supporté directement ou indirectement par le cadre de véhicule (61) et qui supporte la béquille latérale (51), dans lequel
le capteur d'angle (35) est disposé devant le support de béquille (74) en direction avant-arrière (X) du véhicule à enfourcher (1).

12. Véhicule à enfourcher (1) selon la revendication 11, comprenant en outre :
un support adaptateur (72) qui est supporté directement ou indirectement par le cadre de véhicule (61) et qui supporte le support de pédale (76) et le support de béquille (74) ; et
un élément de fixation (85) qui fixe conjointement le support de pédale (76) et le support de béquille (74) au support adaptateur (72).

13. Véhicule à enfourcher (1) selon l'une quelconque des revendications 1 à 12, dans lequel
le moteur (11) inclut un couvercle de pignon (14) disposé derrière le couvercle de carter (13) en direction avant-arrière (X) du véhicule à enfourcher (1), et
le capteur d'angle (35) est disposé sous le couvercle de pignon (14) en direction haut-bas (Z) du véhicule à enfourcher (1).

14. Véhicule à enfourcher (1) selon la revendication 13, dans lequel
une extrémité externe (14c) du couvercle de pignon (14) est située le plus à l'extérieur en direction transversale (Y) du véhicule à enfourcher (1), et
le capteur d'angle (35) est disposé plus à l'intérieur que l'extrémité externe (14c) du couvercle de pignon (14) en direction transversale (Y) du véhicule à enfourcher (1).

15. Véhicule à enfourcher (1) selon l'une quelconque des revendications 1 à 14, comprenant en outre un fil électrique (91) qui est connecté au capteur d'angle (35), dans lequel le fil électrique (91) est disposé devant la pédale (34) en direction avant-arrière (X) du véhicule à enfourcher (1).
